(19)

**Europäisches Patentamt**
**European Patent Office**
**Office européen des brevets**

(11) **EP 4 625 880 A1**

(12) **EUROPEAN PATENT APPLICATION**

(43) Date of publication:
**01.10.2025 Bulletin 2025/40**

(21) Application number: **25163358.2**

(22) Date of filing: **12.03.2025**

(51) International Patent Classification (IPC):
***H04L 9/08*** (2006.01)

(52) Cooperative Patent Classification (CPC):
**H04L 9/085; H04L 9/0894**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.03.2024 JP 2024049830**

(71) Applicants:
• **Kabushiki Kaisha Toshiba
Tokyo 105-0023 (JP)**
• **Toshiba Digital Solutions Corporation
Kawasaki-shi, Kanagawa 212-0013 (JP)**

(72) Inventors:
• **KAMURA, Koichiro
Kawasaki-shi (JP)**
• **FUJII, Yoshihiro
Kawasaki-shi (KR)**
• **MATSUO, Masakatsu
Tokyo, 100-0005 (JP)**
• **MUTO, Koji
Tokyo, 100-0005 (JP)**
• **SHINYA, Takuma
Tokyo, 100-0005 (JP)**

(74) Representative: **Marks & Clerk LLP
15 Fetter Lane
London EC4A 1BW (GB)**

(54) **SECRET SHARING-BASED STORAGE SYSTEM AND SECRET SHARING-BASED STORAGE METHOD**

(57) According to one embodiment, a secret sharing-based storage system (1) includes N cloud servers (30) and a secret sharing device (20). The secret sharing device (20) receives second data obtained by encrypt first data using an encryption key from a user terminal (10), generates N distributed data by executing distribution processing on the second data, and stores the N distributed data separately in N cloud servers. The system (1) executes two-path communication between the user terminal and each of the N cloud servers. The first path is for sending second data from the user terminal to the secret sharing device and for sending the distributed data from the secret sharing device to the cloud server. The second path is for sending the encryption key from the user terminal to the cloud server.

F I G. 2

# EP 4 625 880 A1

**Description**

FIELD

Embodiments described herein relate generally to a secret sharing-based storage system and a secret sharing-based storage method.

BACKGROUND

Secret sharing converts data that needs to be kept secret (i.e., original data) into multiple pieces of distributed data and then uses a set of distributed data in a predetermined combination such that the original data can be restored, and ensures that it is difficult to presume the original data by using other combinations. The predetermined combination, which is an arbitrary set of distributed data whose number is more than or equal to the number of threshold values, is referred to as threshold secret sharing. In particular, threshold secret sharing using exclusive OR (XOR) is known as a highly real-time method.

For example, providing a data storage service of distributing the data received from users, storing multiple pieces of distributed data in multiple data centers, and thereby ensuring confidentiality of the data even if some of the data centers are attacked, will be assumed.

In this case, in order to prevent secret sharing locations that distribute the data from being attacked and having the plain text data stolen, it is necessary to execute encryption of the data for confidentiality in addition to encryption for encrypted communication at user locations. However, encryption keys need to be stored at the user locations.

BRIEF DESCRIPTION OF THE DRAWINGS

FIG. 1 is a view showing an example of a configuration a secret sharing-based storage system of a first embodiment.
FIG. 2 is a view showing an example of two-path communication between a user location and a cloud server in the secret sharing-based storage system of the first embodiment.
FIG. 3 is a view showing another example of two-path communication between a user location and a cloud server in the secret sharing-based storage system of the first embodiment.
FIG. 4 is a view showing an example of a configuration of executing two-path communication using the same path between the user location and the cloud server, in the secret sharing-based storage system of the first embodiment.
FIG. 5A is a table showing an example of a data structure of data related to encryption at the user location in the secret sharing-based storage system of the first embodiment.
FIG. 5B is a table showing an example of a data structure related to distribution at a secret sharing location in the secret sharing-based storage system of the first embodiment.
FIG. 5C is a table showing an example of a data structure for storage processing at cloud server [1] 30 in the secret sharing-based storage system of the first embodiment.
FIG. 5D is a table showing a second example of the data structure for storage processing at cloud server [2] 30 in the secret sharing-based storage system of the first embodiment.
FIG. 5E is a table showing a first example of the data structure for storage processing at cloud server [3] 30 in the secret sharing-based storage system of the first embodiment.
FIG. 6A is a table showing a first example of a data structure for response processing in the cloud server when restoring the original data, in the secret sharing-based storage system of the first embodiment.
FIG. 6B is a table showing a second example of a data structure for response processing in the cloud server when restoring the original data, in the secret sharing-based storage system of the first embodiment.
FIG. 6C is a table showing a third example of a data structure for response processing in the cloud server when restoring the original data, in the secret sharing-based storage system of the first embodiment.
FIG. 6D is a table showing a first example of a data structure related to decryption processing at a secret sharing location when restoring the original data, in the secret sharing-based storage system of the first embodiment.
FIG. 6E is a table showing a second example of a data structure related to decryption processing at a secret distribution location when restoring the original data, in the secret sharing-based storage system of the first embodiment.
FIG. 7 is a view showing an example of a hardware configuration of a secret sharing location in the secret sharing-based storage system of the first embodiment.
FIG. 8 is a block diagram showing an example of a hardware configuration of a cloud server in the secret sharing-based storage system of the first embodiment.

FIG. 9 is a view schematically showing two-path communication in the secret sharing-based storage system of the first embodiment.

FIG. 10 is a view illustrating a procedure of the path communication in the secret sharing-based storage system of the first embodiment.

FIG. 11 is a view showing operations of two-path communication between the user location, the secret sharing location, and the cloud server in the secret sharing-based storage system of the first embodiment.

FIG. 12A is a sequence chart (first half part) of the two-path communication in the secret sharing-based storage system of the first embodiment.

FIG. 12B is a sequence chart (second half part) of the two-path communication in the secret sharing-based storage system of the first embodiment.

FIG. 13 is a flowchart showing the two-path communication in the secret sharing-based storage system of the first embodiment.

FIG. 14 is a view showing a modified example of the operations of the two-path communication between the user location, secret sharing location, and the cloud server in the secret sharing-based storage system of the first embodiment.

FIG. 15 is a view showing operations of two-path communication between a user location, a secret sharing location, and a cloud server in a secret sharing-based storage system of a second embodiment.

FIG. 16A is a sequence chart (first half part) of the two-path communication in the secret sharing-based storage system of the second embodiment.

FIG. 16B is a sequence chart (second half part) of the two-path communication in the secret sharing-based storage system of the second embodiment.

FIG. 17 is a flowchart showing the two-path communication in the secret sharing-based storage system of second embodiment.

FIG. 18 is a view showing a modified example of the operations of the two-path communication between the user location, secret sharing location, and the cloud server in the secret sharing-based storage system of the second embodiment.

DETAILED DESCRIPTION

In general, according to one embodiment, a secret sharing-based storage system includes N (N: an integer greater than or equal to 2) cloud servers and a secret sharing device. The secret sharing device receives second data obtained by encrypt first data using an encryption key from a user terminal, generates N pieces of distributed data by executing distribution processing on the second data, and stores the N pieces of distributed data separately in N cloud servers. The system executes two-path communication between the user terminal and each of the N cloud servers using a first path and a second path. The first path is a path for sending the second data from the user terminal to the secret sharing device and sending the distributed data from the secret sharing device to the cloud server. The second path is a path for sending the encryption key from the user terminal to the cloud server.

Embodiments will be described hereinafter with reference to the accompanying drawings.

(First Embodiment)

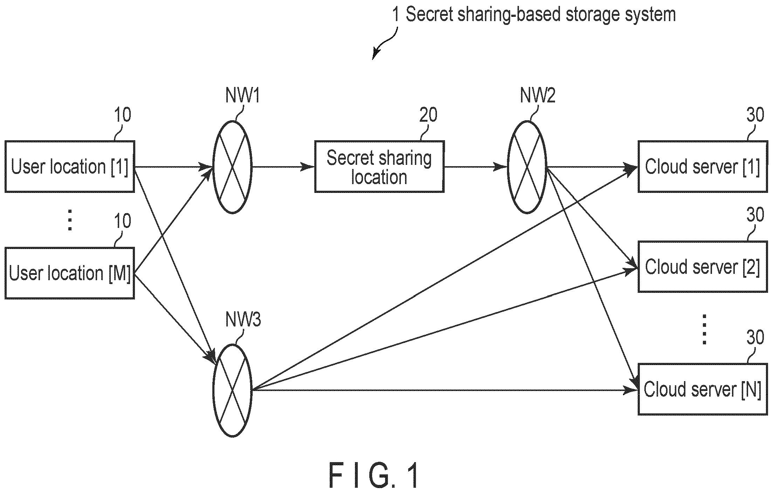

First, a first embodiment will be described. FIG. 1 is a view showing an example of a configuration of a secret sharing-based storage system 1 of the first embodiment.

The secret sharing storage system 1 of the first embodiment is a system that provides a data storage service of securely storing data received from user locations (user terminals) 10. The secret sharing storage system 1 includes a secret sharing location (secret sharing device) 20 and multiple cloud servers (cloud servers) 30. In FIG. 1, M is an integer of 1 or more, and N is an integer of 2 or more.

The user locations 10 and the secret sharing location 20 are connected via a network NW1. The network NW1 may be, for example, a wide area network such as the Internet. In addition, the secret sharing location 20 and the cloud servers 30 are connected via a network NW2. The network NW2 may also be, for example, a wide area network such as the Internet. Furthermore, the user locations 10 and the cloud servers 30 are connected via a network NW3. The network NW3 may also be, for example, a wide area network such as the Internet.

The user locations 10 encrypt the data (original data) that is to be made confidential, generate encrypted data, and then send the generated encrypted data to the secret sharing location 20. Various existing methods can be applied to the method by which the user locations 10 obtain or generate the encryption key (hereinafter referred to as "content encryption key") for encrypting the original data. The user locations 10 and the secret sharing location 20 execute a handshake for communicating via the network NW1. During the handshake, the user locations 10 and the secret sharing location 20 execute mutual authentication. In addition, after the handshake, the user locations 10 and the secret sharing location 20 generate and share encryption keys (common keys) for cryptographic communication (hereinafter referred to as "communication encryption keys"). The cryptographic data sent from the user locations 10 to the secret sharing location 20 passes through the network NW1 in a state of being encrypted with the communication encryption keys shared between the user locations 10 and the secret sharing location 20.

When receiving the data encrypted with the communication encryption keys from the user locations 10, the secret sharing location 20 decrypts the data with the communication encryption keys, reads the encrypted data, executes distribution processing on the encrypted data, and generates N pieces of distributed data. The method of generating N pieces of distributed data will be described in detail later. When executing the distribution processing, the secret sharing location 20 generates N pieces of distribution information indicating how the encrypted data is distributed. The secret sharing location 20 sends N pieces of distributed data to N cloud servers 30, one piece per server. The secret sharing location 20 stores N pieces of distribution information in the storage device provided in the secret sharing location 20.

The data which the secret sharing location 20 receives from the user locations 10 and which is subjected to distribution processing is the encrypted data obtained by encrypting original data with the content encryption keys at the user locations 10. Even if the secret sharing location 20 is attacked, the (plain text) original data is prevented from being stolen.

The secret sharing location 20 and the cloud servers 30 execute a handshake to communicate via the network NW2. During the handshake, the secret sharing location 20 and the cloud servers 30 execute mutual authentication. In addition, after the handshake, the secret sharing location 20 and the cloud servers 30 share encryption keys (common keys) for cryptographic communication. The distributed data sent from the secret sharing location 20 to the cloud servers 30 passes through the network NW2 in a state of being encrypted with the encryption keys shared between the secret sharing location 20 and the cloud servers 30.

In addition, the user locations 10 send the encryption keys (content encryption keys) used to encrypt the original data to each of the N cloud servers 30. The user locations 10 and the cloud servers 30 execute a handshake to communicate via the network NW3. During the handshake, the user locations 10 and the cloud servers 30 execute mutual authentication. In addition, after the handshake, the user locations 10 and the cloud servers 30 share encryption keys (common keys) for cryptographic communication. The encryption keys (content encryption keys) sent from the user locations 10 to the cloud servers 30 pass through the network NW3 in a state of being encrypted with the encryption keys (communication encryption keys) shared between the user locations 10 and the cloud servers 30.

The cloud servers 30 receive the distributed data generated by distributing the encrypted data that has been encrypted with the content encryption key, from the secret sharing location 20, and also receive the content encryption keys from the user locations 10.

The cloud servers 30 executes decryption processing on the distributed data, with the content encryption keys. As a result, the cloud servers 30 can obtain the distributed data as if the processing of encrypting the original data were not executed at the user locations, i.e., as if the distributed data were generated by the secret sharing location 20 distributing the original data as it is. The cloud servers 30 store the obtained distributed data in storage devices provided in the cloud servers 30.

When finishing storing the distributed data generated by distributing the original data in the storage devices provided in the cloud servers 30, the cloud servers 30 may discard the content encryption keys. In addition, when finishing sending the content encryption keys to the cloud servers 30, the user locations 10 may also discard the content encryption keys. In other words, the user locations 10 do not need to store the encryption keys (content keys) used to encrypt the original data.

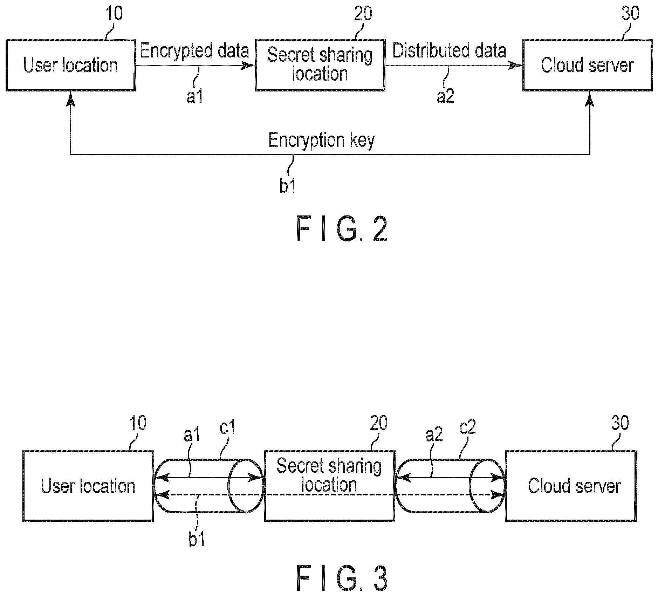

FIG. 2 is a view showing an example of two-path communication between the user location 10 and the cloud server 30 in the secret sharing-based storage system 1.

First, a first path for the user location 10 sending the encrypted data to the secret sharing location 20 (a1) and for the secret sharing location 20 sending the distributed data to the cloud server 30 (a2) is provided between the user location 10 and the cloud server 30. In addition, a second path for the user location 10 sending the encryption key to the cloud server 30 (b1) is provided. By sending and receiving the encryption key in the path (second path) different from the path (first path) for the encrypted data and the distributed data, between the user location 10 and the cloud server 30, i.e., by executing the two-path communication, the secret sharing-based storage system 1 of the first embodiment makes storing the encryption key (content key) at the user location 10 unnecessary in relation to the encryption of the original data at the user location 10, which is required as a measure against the attack to the secret sharing location 20.

In other words, the secret sharing-based storage system 1 of the first embodiment can support the secure storage of data without increasing the burden on the user.

Incidentally, when the user location 10 retrieves the data to be made confidential (original data), which is stored as the distributed data in N cloud servers 30, various types of processing are executed in an order opposite to that of the above-described data storage. More specifically, the cloud server 30 encrypts the distributed data requested by the secret sharing location 20 and sends the data to the secret sharing location 20 by cryptographic communication (i.e., communication involving encryption using a communication encryption key). In addition, the cloud server 30 sends the encryption key (content encryption key) used to encrypt the distributed data to the user location 10 by cryptographic communication.

The secret sharing location 20 executes restoration processing using N pieces of distributed data (or less than N pieces if more than or equal to a threshold value) received from N cloud servers 30 to generate the encrypted data. The secret sharing location 20 sends the generated encrypted data to the user location 10 by the cryptographic communication. The user location 10 decrypts the encrypted data received from the secret sharing location 20, with the encryption key received from the cloud server 30, to obtain the original data.

In addition, the two paths between the user location 10 and the cloud server 30 do not need to be two physically separated real paths, but may be two virtual paths provided virtually on the same real path. FIG. 3 is a view showing another example of two-path communication between the user location 10 and the cloud server 30.

In FIG. 3, a cylindrical object indicated by letter c1 represents a virtual private network (VPN) path established between the user location 10 and the secret sharing location 20. In addition, the cylindrical object indicated by the symbol c2 represents the Virtual Private Network (VPN) path established between the secret sharing location 20 and the cloud server 30.

As for the method of establishing two virtual paths on the real paths c1 and c2, i.e., the method of executing the two-path communication using the same path, for example, a method using secure sockets layer (SSL) - VPN can be applied. For example, first, the virtual communication path c1 is established between the user location 10 and the secret sharing location 20 using SSL - VPN. Next, the virtual communication path c2 is established between the secret sharing location 20 and the cloud server using SSL - VPN. Cryptographic communication (a1) is used to send and receive the encrypted data using the virtual communication path c1, and cryptographic communication (a2) is used to send and receive the distributed data between the secret sharing location 20 and the cloud server 30. In addition, secondly, cryptographic communication (b1) for sending and receiving the encryption keys (content keys) between the user location 10 and the cloud server 30 is executed. Incidentally, the method of executing the two-path communication using the same path is not limited to the method using SSL - VPN, but various methods can be applied.

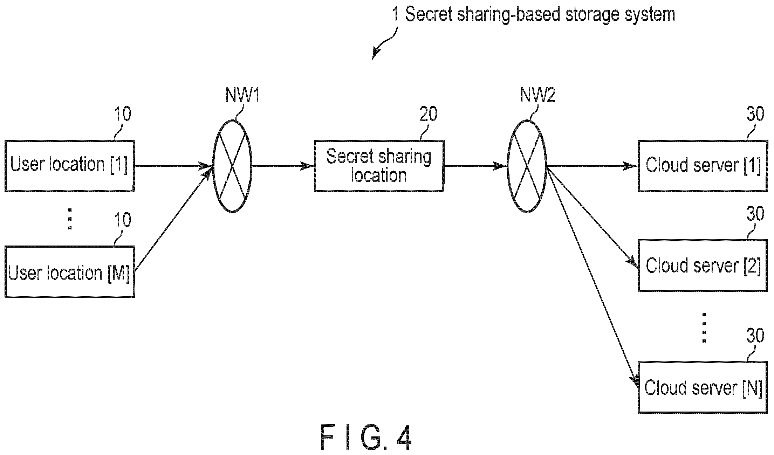

FIG. 4 is a view showing an example of a configuration of the secret sharing-based storage system 1 in a case of executing two-path communication using the same path between the user location 10 and the cloud server 30.

When executing the two-path communication using the same path between the user location 10 and the cloud server 30, the secret sharing-based storage system 1 does not require the network NW3 (cf., FIG. 1) for communicably connecting the user location 10 with the cloud server 30.

The basic data operation and structure of storing the data from the user location 10 to the cloud server 30 via the secret sharing location 20 in the secret sharing-based storage system of the embodiment will be described.

An example of storing data to be made confidential in three cloud servers (N=3) with one user location (M=1) will be illustrated below.

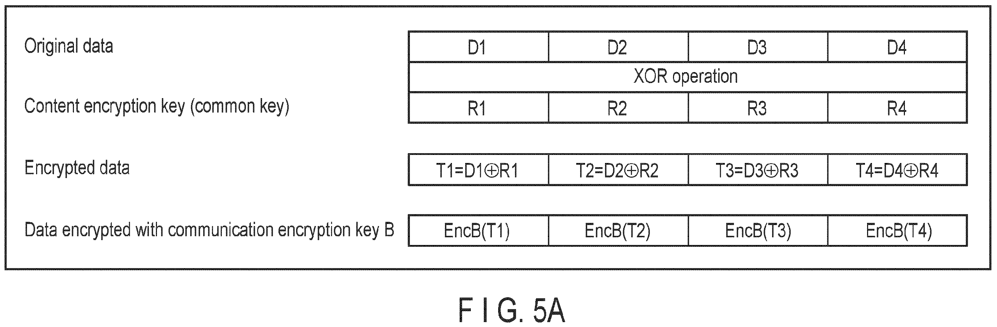

FIG. 5A is a table illustrating the encryption processing at the user location 20. The table shows original data, a content encryption key, encrypted data, and data encrypted with communication encryption key B.

In FIG. 5A, the original data (also referred to as plain text data or content) is divided into specific block units. The original data is assumed to be formed of four block data D1, D2, D3, and D4. The content encryption key (random number) used to encrypt this original data has the same data length as the original data. The content encryption key is assumed to be formed of four block data R1, R2, R3, and R4.

At the user location, the corresponding blocks of the block data D1, D2, D3, and D4 and the block data R1, R2, R3, and R4 are subjected to the XOR operation in the following manner to create encrypted data T1, T2, T3, and T4.

$$T1 = D1 \; XOR \; R1$$

$$T2 = D2 \; XOR \; R2$$

$$T3 = D3 \; XOR \; R3$$

$$T4 = D4 \; XOR \; R4$$

Next, using the common key B for communication, T1, T2, T3 and T4 are encrypted to create the following double-encrypted data, which is then sent to the secret sharing location 20.

$$First \; block \; of \; double\text{-}encrypted \; data = EncB \; (T1)$$

$$Second \; block \; of \; double\text{-}encrypted \; data = EncB \; (T2)$$

```
Third block of double-encrypted data = EncB (T3)

Fourth block of double-encrypted data = EncB (T4)
```

The "EncB ()" indicates the processing of encrypting with the common key B for communication. The common key B for communication executes a handshake between the user location 10 and the secret sharing location 20, with protocols such as SSL/TLS, and the encryption algorithm determined at this time is used.

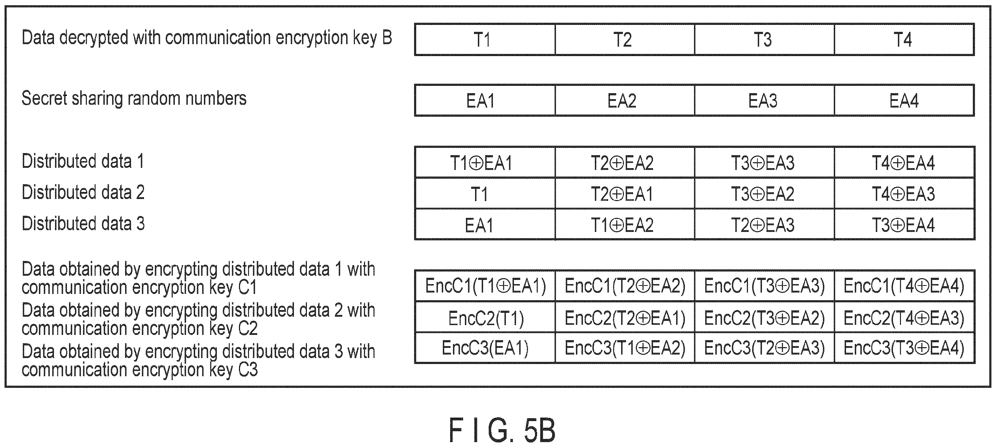

FIG. 5B is a table illustrating the processing at the secret sharing location 20.

At the secret sharing location, the received double-encrypted data is decrypted with the common key B for communication, and the encrypted data T1, T2, T3, and T3 are extracted.

First block of data decrypted with encryption key B for communication = T1 Second block of data decrypted with encryption key B for communication = T2 Third block of data decrypted with encryption key B for communication = T3 Fourth block of data decrypted with encryption key B for communication = T4

Next, secret sharing random numbers EA1, EA2, EA3, and EA4 are generated.

Corresponding blocks of the generated secret sharing random numbers EA1, EA2, EA3, and EA4 and the encrypted data T1, T2, T3, and T4 are subjected to the XOR operation to generate the distributed data 1 as follows.

```
First block of distributed data 1 = T1 XOR EA1 Second block of distributed data 1 = T2 XOR EA2

Third block of distributed data 1 = T3 XOR EA3

Fourth block of distributed data 1 = T4 XOR EA4
```

In addition, the generated secret sharing random numbers EA1, EA2, EA3, and EA4 are shifted one block to the right side, and are subjected to the XOR operation with the encrypted data T1, T2, T3, and T4 to create the distributed data 2 as follows.

```
First block of distributed data 2 = T1

Second block of distributed data 2 = T2 XOR EA1 Third block of distributed data 2 = T3 XOR EA2

Fourth block of distributed data 2 = T4 XOR EA3
```

Similarly, at a next time, the encrypted data T1, T2, T3, and T4 are shifted one block to the right side, and are subjected to the XOR operation with the secret sharing random numbers EA1, EA2, EA3, and EA4 to create the distributed data 3 as follows.

```
First block of distributed data 3 = EA1

Second block of distributed data 3 = T1 XOR EA2

Third block of distributed data 3 = T2 XOR EA3
```

```
Fourth block of distributed data 3 = T3 XOR EA4
```

Next, the servers of storing destinations that store the distributed data 1, distributed data 2, and distributed data 3 are determined.

The servers of storing destinations may generate a random number P1 for determining the server for storing destination, and the pattern of storing destinations may change depending on the value of P1.

For example, if remainder 3 of the value of the random number P1 is calculated and the remainder is 0, the distributed data 1 may be stored on the cloud server [1] 30, the distributed data 2 may be stored on the cloud server [2] 30, and the distributed data 3 may be stored on the cloud server [3] 30;

if the remainder is 1, the distributed data 1 may be stored on the cloud server [2] 30, the distributed data 2 may be stored on the cloud server [3] 30, and the distributed data 3 may be stored on the cloud server [1] 30; and

if the remainder is 2, the distributed data 1 may be stored on the cloud server [3] 30, the distributed data 2 may be stored on the cloud server [1] 30, and the distributed data 3 may be stored on the cloud server [2] 30.

In this case, the information of P1 may be added to the header information of the distributed data 1, distributed data 2, and distributed data 3, and sent to each of the cloud servers.

When the server of storing destination is determined, the secret sharing location encrypts the information on each distributed data and random number P1 using the corresponding communication encryption keys C1, C2, and C3, and sends the information to each of the cloud servers.

The secret sharing location 20 may store the information of the cloud servers of the send destinations and store information (or random number P1) indicating which server the distributed data 1, the distributed data 2, and the distributed data 3 are sent to, to improve efficiency of the restoring processing.

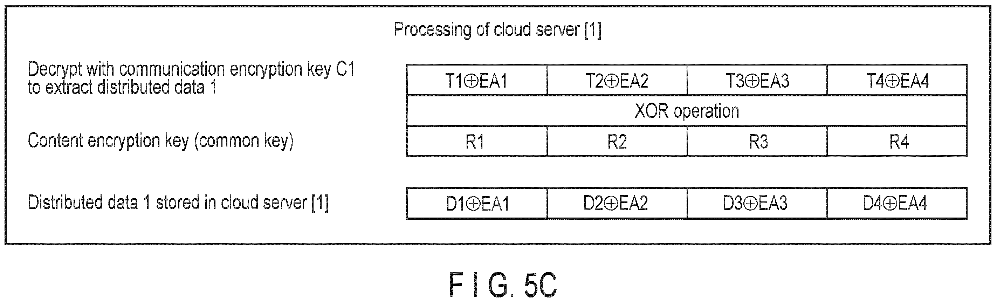

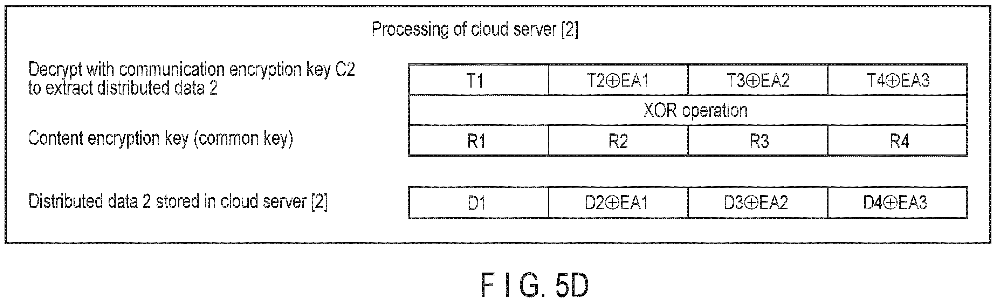

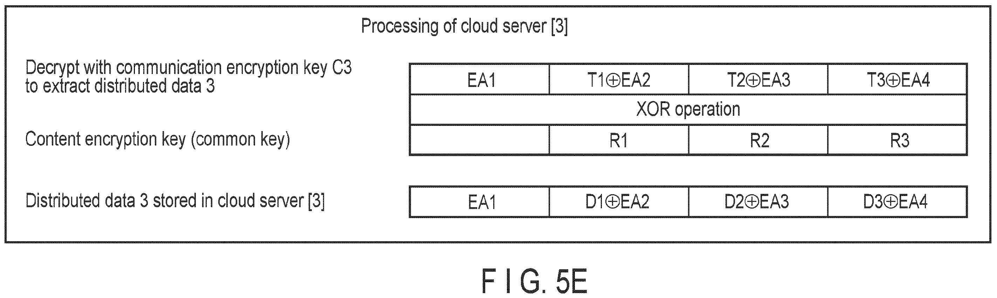

FIG. 5C is a table illustrating the processing of the cloud server [1] 30, FIG. 5D is a table illustrating the processing of the cloud server [2] 30, and FIG. 5E is a table illustrating the processing of the cloud server [3] 30, in the secret sharing-based storage system of the embodiment.

It is assumed below that the distributed data 1 is sent to the cloud server [1] 30, that the distributed data 2 is sent to the cloud server [2] 30, and that the distributed data 3 is sent to the cloud server [3] 30, to simplify the descriptions.

The secret sharing location 20 sends data to the cloud server [1] 30 as follows.

First block of communication-encrypted distributed data 1 = EncC1 (T1 XOR EA1) Second block of communication-encrypted distributed data 1 = EncC1 (T2 XOR EA2) Third block of communication-encrypted distributed data 1 = EncC1 (T3 XOR EA3) Fourth block of communication-encrypted distributed data 1 = EncC1 (T4 XOR EA4)

Similarly, the secret sharing location 20 sends data to the cloud server [2] 30 as follows.

First block of communication-encrypted distributed data 2 = EncC2 (T1) Second block of communication-encrypted distributed data 2 = EncC2 (T2 XOR EA1) Third block of communication-encrypted distributed data 2 = EncC2 (T3 XOR EA2) Fourth block of communication-encrypted distributed data 2 = EncC2 (T4 XOR EA3)

Similarly, the secret sharing location 20 sends data to the cloud server [3] 30 as follows.

First block of communication-encrypted distributed data 2 = EncC3 (EA1) Second block of communication-encrypted distributed data 2 = EncC3 (T1 XOR EA2) Third block of communication-encrypted distributed data 2 = EncC3 (T2 XOR EA3) Fourth block of communication-encrypted distributed data 2 = EncC3 (T3 XOR EA4)

When receiving the communication-encrypted distributed data 1, the cloud server [1] 30 decrypts the data with the communication encryption key C1 and generates the following distributed data 1.

First block of decrypted distributed data 1 = T1 XOR EA1 Second block of decrypted distributed data 1 = T2 XOR EA2 Third block of decrypted distributed data 1 = T3 XOR EA3 Fourth block of decrypted distributed data 1 = T4 XOR EA4

The cloud server [1] 30 executes the XOR operation on the corresponding blocks of the decrypted distributed data 1 and the content encryption keys R1, R2, R3, and R4, and generates the distributed data 1 to be stored as follows.

First block of distributed data 1 to be stored = T1 XOR EA1 XOR R1 Second block of distributed data 1 to be stored = T2 XOR EA2 XOR R2 Third block of distributed data 1 to be stored = T3 XOR EA3 XOR R3 Fourth block of distributed data 1 to be stored = T4 XOR EA4 XOR R4

Since T1 = D1 XOR R1, T2 = D2 XOR R2, T3 = D3 XOR R3, and T4 = D4 XOR R4, the first to four blocks of the distributed data 1 to be stored are the following data.

First block of distributed data 1 to be stored = D1 XOR EA1 Second block of distributed data 1 to be stored = D2 XOR EA2 Third block of distributed data 1 to be stored = D3 XOR EA3 Fourth block of distributed data 1 to be stored = D4 XOR EA4

In other words, the distributed data 1 which would be generated if the secret sharing location 20 distributed the original data as it is, is stored as if the processing of encrypting the original data were not executed at the user locations.
Similarly, when receiving the communication-encrypted distributed data 2, the cloud server [2] decrypts the distributed data 2 encrypted with the communication encryption key C2, with the communication encryption key C2.

```
First block of decrypted distributed data 2 = T1
```

Second block of decrypted distributed data 2 = T2 XOR EA1 Third block of decrypted distributed data 2 = T3 XOR EA2 Fourth block of decrypted distributed data 2 = T4 XOR EA3

The cloud server [1] 30 executes the XOR operation on the corresponding blocks of the decrypted distributed data 2 and the content encryption keys R1, R2, R3, and R4, and generates the distributed data 2 to be stored as follows.

First block of distributed data 2 to be stored = T1 XOR R1 Second block of distributed data 2 to be stored = T2 XOR EA1 XOR R2 Third block of distributed data 2 to be stored = T3 XOR EA2 XOR R3 Fourth block of distributed data 2 to be stored = T4 XOR EA3 XOR R4

Since T1 = D1 XOR R1, T2 = D2 XOR R2, T3 = D3 XOR R3, and T4 = D4 XOR R4, the first to four blocks of the distributed data 2 to be stored are the following data.

First block of distributed data 2 to be stored = D1 Second block of distributed data 2 to be stored = D2 XOR EA1 Third block of distributed data 2 to be stored = D3 XOR EA2 Fourth block of distributed data 2 to be stored = D4 XOR EA3

In other words, the distributed data 2 which would be generated if the secret sharing location 20 distributed the original data as it is, is stored as if the processing of encrypting the original data were not executed at the user locations.
Similarly, when receiving the communication-encrypted distributed data 3, the cloud server [3] decrypts the distributed data 3 encrypted with the communication encryption key C3.

```
     First block of distributed data 3 = EA1

     Second block of distributed data 3 = T1 XOR EA2

     Third block of distributed data 3 = T2 XOR EA3

     Fourth block of distributed data 3 = T3 XOR EA4
```

The cloud server [1] 30 shifts the decrypted distributed data H3 and the content encryption keys R1, R2, and R3 by one block to the right side, executes the XOR operation on the corresponding blocks, and generates the distributed data 3 to be stored as follows.

First block of distributed data 3 to be stored = EA1 Second block of distributed data 3 to be stored = T1 XOR EA2 XOR R1 Third block of distributed data 3 to be stored = T2 XOR EA3 XOR R2 Fourth block of distributed data 3 to be stored = T3 XOR EA4 XOR R3

Since T1 = D1 XOR R1, T2 = D2 XOR R2, T3 = D3 XOR R3, and T4 = D4 XOR R4, the first to four blocks of the distributed data 3 to be stored are the following data.

First block of distributed data 3 to be stored = EA1 Second block of distributed data 3 to be stored = D1 XOR EA2 Third block of distributed data 3 to be stored = D2 XOR EA3 Fourth block of distributed data 3 to be stored = D3 XOR EA4

In other words, the distributed data 3 which would be generated if the secret sharing location 20 distributed the original data as it is, is stored as if the processing of encrypting the original data were not executed at the user locations.

As described above, in the embodiment, the user location 10 shares the content encryption key of the same length as the original data with multiple cloud servers 30, and encrypts the original data with the content encryption key before sending the original data to the secret sharing location. After that, the secret sharing location generates multiple pieces of distributed data of the same length as the original data and sends the data to the multiple cloud servers 30. The feature of the cloud servers 30 is that the distributed data that would be generated if the secret sharing location 20 distributed the original data as it is is stored with the content encryption key as if the processing of encrypting the original data were not executed at the user location.

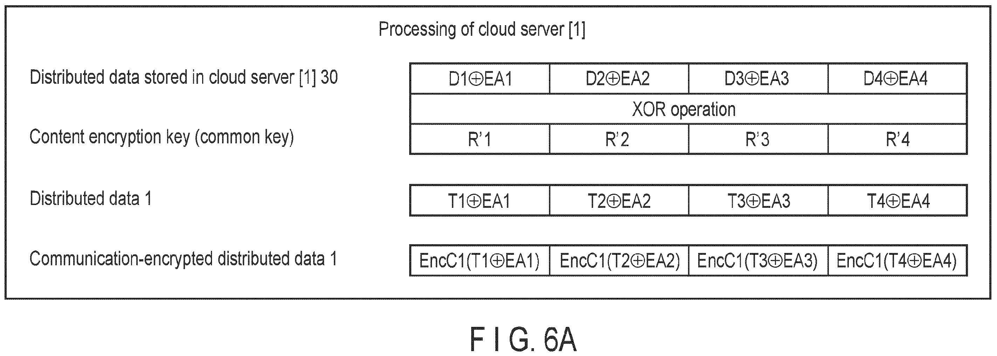

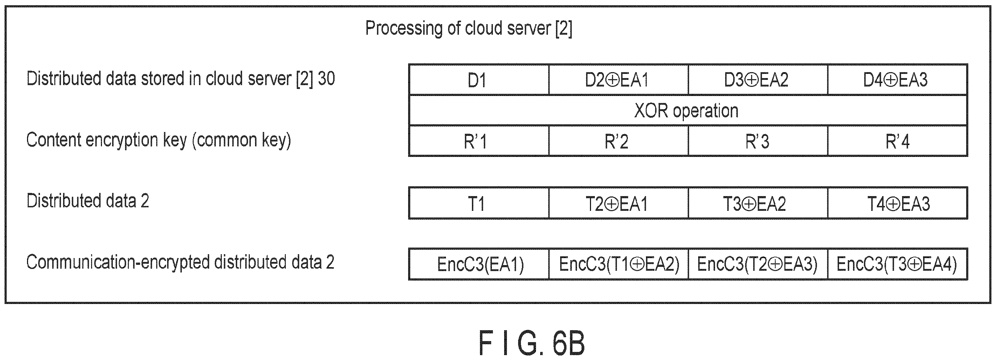

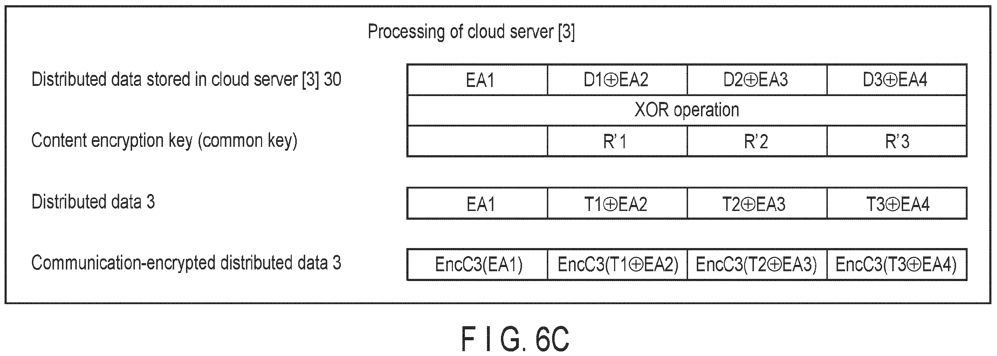

Next, a procedure of collecting the distributed data stored in the multiple cloud servers 30 and restoring the original encrypted data will be described. FIG. 6A, FIG. 6B, and FIG. 6C are tables showing an example of a data structure for response processing in the cloud server when restoring the original data, in the secret sharing-based storage system of the first embodiment.

The user location 10 newly generates content encryption keys (random numbers) R'1, R'2, R'3, and R'4, and encrypts and sends the content encryption keys to the cloud server [1] 30, the cloud server [2] 30, and the cloud server [3] 30 with a communication encryption key A.

Then, the user location 10 then sends a request to restore the original encrypted data to the secret sharing location 20.

When receiving the recovery request, the secret sharing location 20 requests at least two of the cloud server [1] 30, the cloud server [2] 30, and the cloud server [3] 30 to send the distributed data to the secret sharing location 40.

The cloud server [1] 30 retrieves the stored distributed data 1.

First block of stored distributed data 1 = D1 XOR EA1 Second block of stored distributed data 1 = D2 XOR EA2 Third block of stored distributed data 1 = D3 XOR EA3 Fourth block of stored distributed data 1 = D4 XOR EA4

The cloud server [1] 30 executes the XOR operation on the corresponding blocks of the stored distributed data 1 and the content encryption keys R'1, R'2, R'3, and R'4, and generates the distributed data 1 as follows.

First block of distributed data 1 = D1 XOR EA1 XOR R'1 Second block of distributed data 1 = D2 XOR EA2 XOR R'2 Third block of distributed data 1 = D3 XOR EA3 XOR R'3 Fourth block of distributed data 1 = D4 XOR EA4 XOR R'4

The distributed data 1 is as follows since T1 = D1 XOR R'1, T2 = D2 XOR R'2, T3 = D3 XOR R'3, and T4 = D4 XOR R'4.

First block of distributed data 1 = D1 XOR EA1 XOR R'1 = T1 XOR EA1 Second block of distributed data 1 = D2 XOR EA2 XOR R'2 = T2 XOR EA2 Third block of distributed data 1 = D3 XOR EA3 XOR R'3 = T3 XOR EA3 Fourth block of distributed data 1 = D4 XOR EA4 XOR R'4 = T4 XOR EA4

Next, the cloud server [1] 30 encrypts the distributed data 1 with the communication encryption C1, and sends the distributed data 1 communication-encrypted as described below to the secret sharing location 20.

First block of communication-encrypted distributed data 1 = EncC1 (T1 XOR EA1) Second block of communication-encrypted distributed data 1 = EncC1 (T2 XOR EA2) Third block of communication-encrypted distributed data 1 = EncC1 (T3 XOR EA3) Third block of communication-encrypted distributed data 1 = EncC1 (T4 XOR EA4)

Similarly, the cloud server [2] 30 retrieves the stored distributed data 2.

First block of stored distributed data 2 = D1 Second block of stored distributed data 2 = D2 XOR EA1 Third block of stored distributed data 2 = D3 XOR EA2 Fourth block of stored distributed data 2 = D4 XOR EA3

The corresponding blocks of the stored distributed data 2 and the content encryption keys R'1, R'2, R'3, and R'4 are subjected to the XOR operation to generate distributed data 2 as follows.

```
First block of distributed data 2 = D1 XOR R'1
```

Second block of distributed data 2 = D2 XOR EA1 XOR R'2 Third block of distributed data 2 = D3 XOR EA2 XOR R'3 Fourth block of distributed data 2 = D4 XOR EA3 XOR R'4

The distributed data 2 is as follows since T1 = D1 XOR R'1, T2 = D2 XOR R'2, T3 = D3 XOR R'3, and T4 = D4 XOR R'4.

First block of distributed data 2 = D1 XOR R'1 = T1 Second block of distributed data 2 = D2 XOR EA1 XOR R'2 = T2 XOR EA1 Third block of distributed data 1 = D3 XOR EA2 XOR R'3 = T3 XOR EA2 Fourth block of distributed data 1 = D4 XOR EA3 XOR R'4 = T4 XOR EA3

Next, the cloud server [2] 30 encrypts the distributed data 2 with the communication encryption C2, and sends the distributed data 2 communication-encrypted as described below to the secret sharing location.

First block of communication-encrypted distributed data 1 = EncC2 (T1) Second block of communication-encrypted distributed data 2 = EncC2 (T2 XOR EA1) Third block of communication-encrypted distributed data 2 = EncC2 (T3 XOR EA2) Third block of communication-encrypted distributed data 2 = EncC2 (T4 XOR EA3)

Similarly, the cloud server [3] 30 retrieves the stored distributed data 3.

First block of stored distributed data 3 = EA1

Second block of stored distributed data 3 = D1 XOR EA2 Third block of stored distributed data 3 = D2 XOR EA3 Fourth block of stored distributed data 3 = D3 XOR EA4

The stored distributed data 3 and the content encryption keys R'1, R'2, and R'3 are subjected to the XOR operation in the following manner to generate distributed data 3.

First block of distributed data 3 = EA1

Second block of distributed data 3 = D1 XOR EA2 XOR R'1 Third block of distributed data 2 = D2 XOR EA3 XOR R'2 Fourth block of distributed data 3 = D3 XOR EA4 XOR R'3

The distributed data 3 is as follows since T1 = D1 XOR R'1, T2 = D2 XOR R'2, T3 = D3 XOR R'3, and T4 = D4 XOR R'4.

First block of distributed data 3 = EA1

Second block of distributed data 3 = D1 XOR EA2 XOR R'1 = T1 XOR EA1 Third block of distributed data 3 = D2 XOR EA3 XOR R'2 = T2 XOR EA2 Fourth block of distributed data 3 = D3 XOR EA4 XOR R'3 = T3 XOR EA3

Next, the cloud server [3] encrypts the distributed data 3 with the communication encryption C3, and sends the distributed data 2 communication-encrypted as described below to the secret sharing location 20.

First block of communication-encrypted distributed data 3 = EncC3 (EA1) Second block of communication encrypted distributed data 3 = EncC3 (T1 XOR EA1) Third block of communication-encrypted distributed data 3 = EncC3 (T2 XOR EA2) Fourth block of communication-encrypted distributed data 3 = EncC3 (T3 XOR EA3)

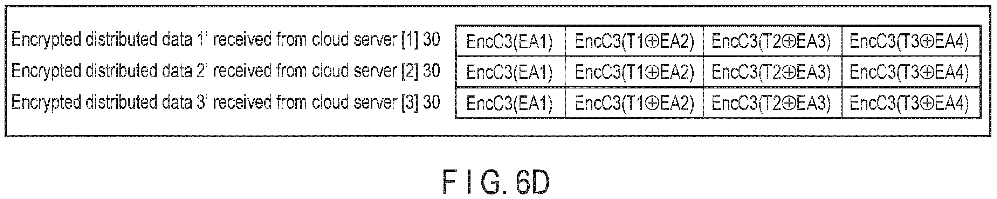

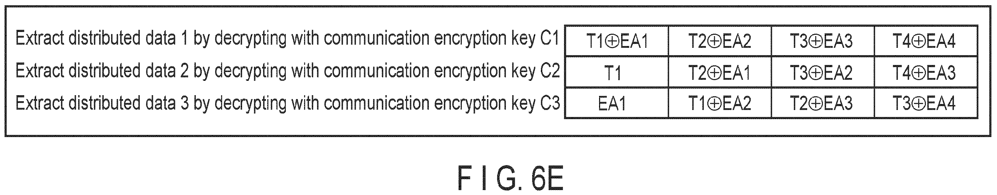

FIG. 6D and FIG. 6E are tables illustrating the procedure for decrypting the distributed data at the secret sharing point 20, based on the data structure shown in FIG. 6A, FIG. 6B, and FIG. 6C.

The secret sharing location 20 receives the encrypted distributed data (hereinafter referred to as "encrypted distributed data") as shown in FIG. 6D, such as encrypted distributed data 1', encrypted distributed data 2', and encrypted distributed data 3', from the cloud server [1] 30, the cloud server [2] 30, and the cloud server [3] 30.

As shown in FIG. 6E, the secret sharing location 20 extracts the distributed data 1 by decrypting the encrypted distributed data 1' with the communication encryption key C1 shared with the cloud server [1] 30, extracts the distributed data 2 by decrypting the encrypted distributed data 2' with the communication encryption key C2 shared with the cloud server [2] 30, and extracts the distributed data 3 by decrypting the encrypted distributed data 3' with the communication encryption key C3 shared with the cloud server [3] 30.

The secret sharing location 20 restores the encrypted data T1, T2, T3, and T4 using two of the distributed data 1, 2, and 3 in the following procedure.

a) When collecting the distributed data 1 and the distributed data 2,

the secret sharing location 20 restores T1 from the first block of the distributed data 2;
restores EA1 by executing the XOR operation for the restored T1 and the first block of the distributed data 1;
restores T2 by executing the XOR operation for the restored EA1 and the second block of the distributed data 2;
restores EA2 by executing the XOR operation for the restored T2 and the second block of the distributed data 1;
restores T3 by executing the XOR operation for the restored EA2 and the third block of the distributed data 2;
restores EA3 by executing the XOR operation for the restored T3 and the third block of the distributed data 1;
restores T4 by executing the XOR operation for the restored EA3 and the fourth block of the distributed data 2; and
restores EA4 by executing the XOR operation for the restored T4 and the fourth block of the distributed data 1.

b) When collecting the distributed data 1 and the distributed data 3,

restores EA1 from the first block of the distributed data 3;
restores T1 by executing the XOR operation for the restored EA1 and the first block of the distributed data 1;
restores EA2 by executing the XOR operation for the restored T1 and the second block of the distributed data 3;
restores T2 by executing the XOR operation for the restored EA2 and the second block of the distributed data 1;
restores EA3 by executing the XOR operation for the restored T2 and the third block of the distributed data 3;
restores T3 by executing the XOR operation for the restored EA3 and the third block of the distributed data 1;
restores EA4 by executing the XOR operation for the restored T3 and the fourth block of the distributed data 3; and
restores T4 by executing the XOR operation for the restored EA4 and the fourth block of the distributed data 1.

c) When collecting the distributed data 2 and the distributed data 3,

the secret sharing location 20 restores T1 from the first block of the distributed data 2;
restores EA1 from the first block of the distributed data 3;
restores EA2 by executing the XOR operation for the restored T1 and the second block of the distributed data 3;
restores T2 from the restored EA1 and the second block of the distributed data 2;
restores T3 by executing the XOR operation for the restored EA2 and the third block of the distributed data 2;
restores EA3 by executing the XOR operation for the restored T2 and the third block of the distributed data 3;
restores T4 by executing the XOR operation for the restored EA3 and the fourth block of the distributed data 2; and
restores EA4 by executing the XOR operation for the restored T3 and the fourth block of the distributed data 3.

Next, the secret sharing location 20 encrypts the encrypted data T1, T2, T3, and T4 with the communication encryption key A and sends the data to the user location 10.

At the user location 10, the received encrypted data T1, T2, T3, and T4 and the content encryption keys R'1, R'2, R'3, and R'4 are subjected to the XOR operation to recover the original data D1, D2, D3, and D4 as follows.

$$D1 = T1 \ XOR \ R'1$$

$$D2 = T2 \ XOR \ R'2$$

$$D3 = T3 \ XOR \ R'3$$

$$D4 = T3 \ XOR \ R'4$$

As described above, when distributing and storing the data in the multiple cloud servers 30 via the secret sharing location 20, the secret sharing-based storage system of the present invention shares with the content key between the user locations 10 and the cloud servers 30 without having the secret sharing location intervened, and sends the encrypted data that is encrypted with the content key at the user location, to the secret sharing location, thereby preventing the plain text data from being stolen even if the secret sharing location is attacked.

In addition, since the processing of canceling the influence from the encryption of the distributed data received at each cloud server 30 with the content key is executed, there is no need to store the content key for a long time at the user location.

In other words, the content key may be canceled at the user location and each cloud server when the distributed data is stored in each of the cloud servers 30.

Then, since the secret sharing random numbers EA1, EA2, EA3, and EA4 can be restored by collecting the distributed data from two or more of the cloud servers [1] 30, [2] 30, and [3] 30, there is no need to store the secret sharing random number keys at the secret sharing location.

Similarly, since the original data D1, D2, D3, and D4 can be restored by collecting distributed data from two or more of the cloud servers [1] 30, [2] 30, and [3] 30, the availability can be improved.

For example, even if one cloud server is stopped for maintenance, inspection, or the like, the system can still operate normally if the other two cloud servers operate normally.

Incidentally, an example of the method of generating the distributed data is shown in FIG. 5B, but the other method as disclosed in JP 2007-124032 A cited as Patent Literature 1 may also be used.

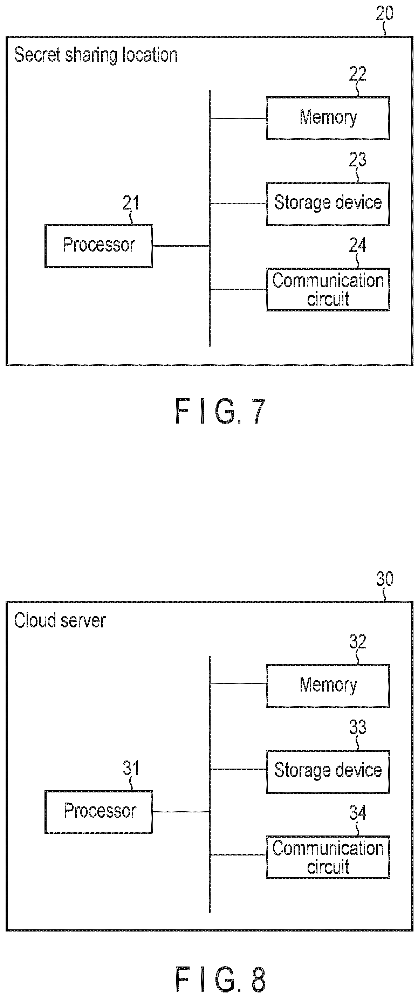

FIG. 7 is a block diagram showing an example of a hardware configuration of the secret sharing location 20.

The secret sharing location 20 includes a processor 21, a memory 22, a storage device 23, and a communication circuit 24.

The processor 21 is configured using, for example, a CPU, DSP, or FPGA, and cooperate with the memory 22 in accordance with the program and data stored in advance in the memory 22.

The processor 21 executes distribution processing of the encrypted data sent from the user location 10 via the communication circuit 24, and generates N pieces of distributed data and N pieces of distributed information. The processor 21 sends the N pieces of distributed data to the N cloud servers 30 via the communication circuit 24. At this time, the processor 21 stores the N pieces of distributed information in the storage device 23.

When requested to read the data from the user location 10 via the communication circuit 24, the processor 21 sends a request to acquire the distributed data of the encrypted data to each of the cloud servers 30. The processor 21 reads N pieces of distributed information from the memory 22, executes the restoration processing of the distributed data using sets of the number larger than or equal to a threshold value necessary for the restoration processing, of distributed data (encrypted by the cloud server 30), and the corresponding distributed information, and generates the encrypted data. The processor 21 sends the encrypted data to the user location 10 via the communication circuit 24.

The memory 22 is configured using, for example, RAM and ROM, and temporarily holds programs and data necessary for executing the operations of the secret sharing location 20, and data or information generated during operations. The RAM is, for example, a work memory used during the operation of the secret sharing location 20. The ROM stores and holds in advance, for example, programs and data used to control the secret sharing location 20.

The storage device 23 is configured using, for example, an HDD or SSD and stores N pieces of distributed information.

The communication circuit 24 is configured using a circuit which communicates with various devices connected communicably with the secret sharing location 20. The communication circuit 24 executes data communication with each of the multiple user terminals 10 via the network NW1. The communication circuit 24 executes data communication with each of the multiple cloud servers 30 via the network NW2.

FIG. 8 is a block diagram showing an example of a hardware configuration of the cloud server 30.

The cloud server 30 includes a processor 31, a memory 32, a storage device 33, and a communication circuit 34.

The processor 31 is configured using, for example, a CPU, DSP, or FPGA, and cooperate with the memory 32 in accordance with the program and data stored in advance in the memory 32. The processor 31 executes decryption processing using the cryptographic key (content key) received from the user location 10 via the communication circuit 34 on the distributed data of the cryptographic data received from the secret sharing location 20 via the communication circuit 34, and stores the generated distributed data of the original data in the storage device 33.

When receiving the request to acquire the distributed data from the secret sharing location 20 via the communication circuit 34, the processor 31 reads and encrypts the distributed data stored in the storage device 33, and sends the data to the secret sharing location 20. At this time, the processor 31 sends the encryption key (content encryption key) used to encrypt the distributed data to the user location 10.

The memory 32 is configured using, for example, RAM and ROM, and temporarily holds programs and data necessary for executing the operations of the cloud server 30, and data or information generated during operations. The RAM is, for example, a work memory used during the operation of the cloud server 30. The ROM stores and holds in advance, for example, programs and data used to control the cloud server 30.

The storage device 33 is configured using, for example, an HDD or SSD, and stores the distributed data of the original data (obtained by executing the decryption processing on the distributed data of the encrypted data).

The communication circuit 34 is configured using a circuit which communicates with various devices connected communicably with the cloud server 30. The communication circuit 34 executes data communication with the secret sharing location 20. In addition, the communication circuit 34 executes data communication with the user location 10.

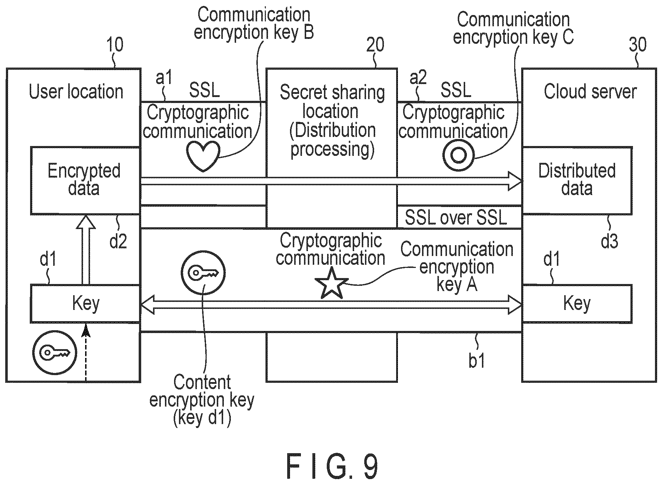

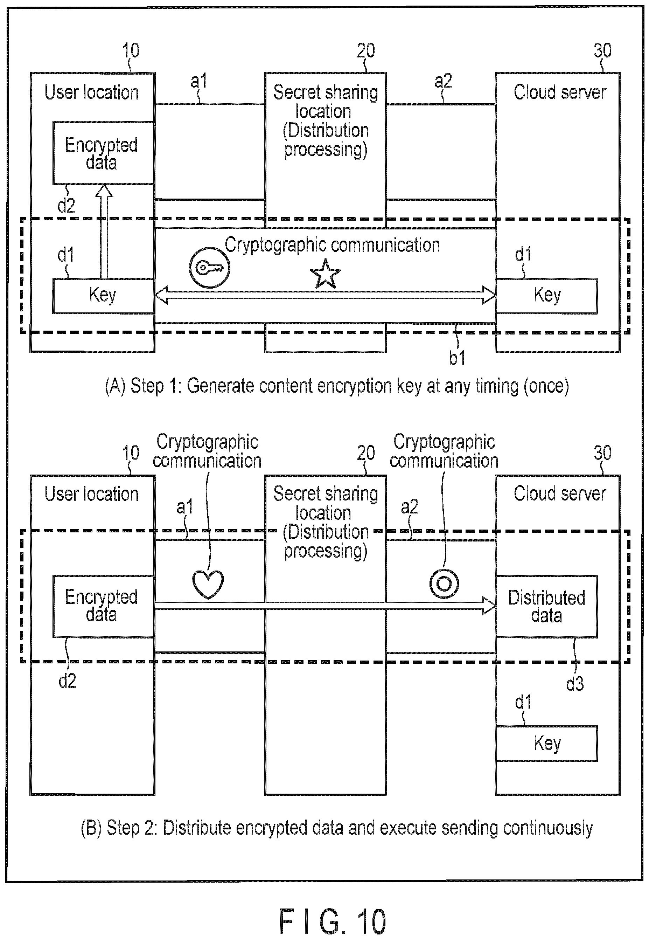

Next, the two-path communication executed by the secret sharing-based storage system 1 of the first embodiment will be described in more detail with reference to FIG. 9 and FIG. 10. FIG. 9 is a view schematically showing two-path communication in the secret sharing-based storage system 1 of the first embodiment.

As described above, in the secret sharing-based storage system 1 of the first embodiment, the two-path communication using a first path (a1, a2) for sending and receiving the data, and the second path (b1) for sending and receiving the content encryption key used for encrypting and decrypting the data, between the user location 10 and the cloud server 30, is executed. This two-path communication is executed by establishing two virtual paths on the same real path by using, for example, SSL-VPN.

More specifically, first, the user location 10 and the secret sharing location 20 execute cryptographic communication using SSL-VPN for the encrypted data d2 obtained by encrypting the data (original data) that the user location 10 wants to make confidential with the content encryption key d1. The cryptographic communication between the user location 10 and the secret sharing location 20 is executed using the communication encryption key B, which is generated during the handshake between the two parties. In addition, the secret sharing location 20 and the cloud server 30 execute cryptographic communication using SSL-VPN for the distributed data d3 generated by the secret sharing location 20 executing the distribution processing for the encrypted data d2. The cryptographic communication between the secret sharing location 20 and the cloud server 30 is executed using the communication encryption key C, which is generated during the handshake between the two parties.

Then, the user location 10 and the cloud server 30 execute cryptographic communication using SSL-VPN for the content encryption key d1 used by the user location 10 to encrypt the original data. In this case, the cryptographic communication between the user location 10 and the cloud server 30 is executed using SSL over SSL, and is executed using the communication encryption key A generated during the handshake between the two parties.

FIG. 10 is a view illustrating a procedure of the two-path communication in the secret sharing-based storage system 1 of the first embodiment.

In the secret sharing-based storage system 1 of the first embodiment, first, as shown in FIG. 10(A), generation of the content encryption key d1 shared between the user location 10 and the cloud server 30 is executed. The generation of the content encryption key d1 may be executed only once at any timing.

After sharing the content encryption key d1 between the user location 10 and the cloud server 30 is completed, then the cryptographic communication of the encrypted data d2 (obtained by encrypting the original data with the content encryption key d1) between the user location 10 and the secret sharing location 20 is executed, and the cryptographic communication of the distributed data d3 (generated by distributing the encrypted data d2) between the secret sharing location 20 and the cloud server 30 is executed, as shown in FIG. 10(B). The cryptographic communication of the encrypted data d2 and the distributed data d3 is executed continuously.

The two-path communication in the secret sharing-based storage system 1 of the first embodiment is executed in the above procedure. Incidentally, the cloud server 30 executes decryption processing using the content encryption key d1 received from the user location 10 for the distributed data d3 received from the secret sharing location 20. As a result, the cloud server 30 acquires the distributed data that is generated by executing the distributed processing on the original data.

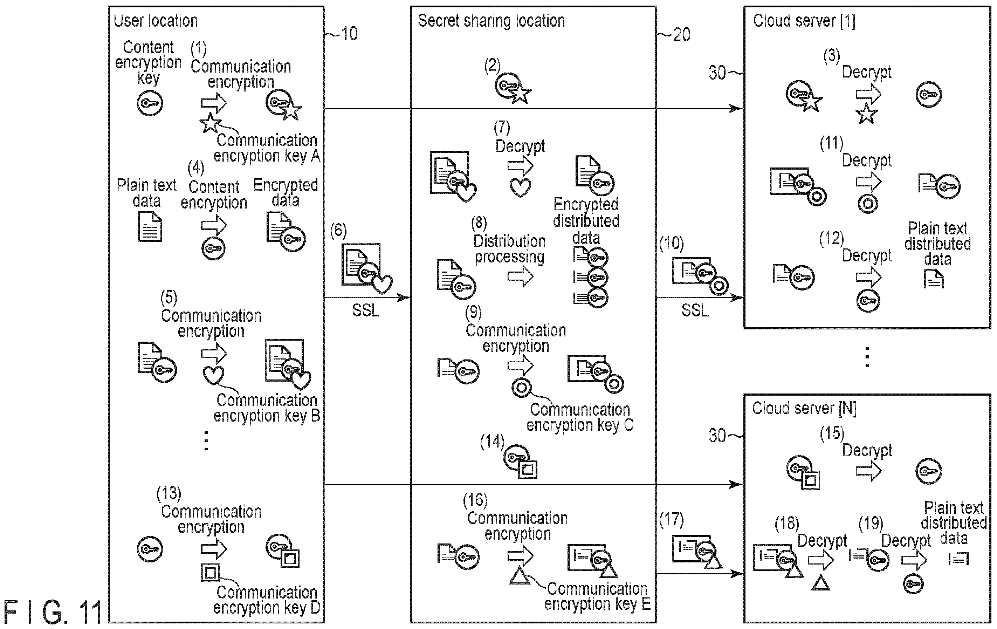

FIG. 11 is a view showing operations of two-path communication between the user location 10, the secret sharing location 20, and the cloud server 30 in the secret sharing-based storage system 1 of the first embodiment.

The user location 10 encrypts the content encryption key with the communication encryption key A (1), and sends the encrypted content encryption key to the cloud server [1] 30 (2). The communication encryption key A is an encryption key for cryptographic communication, which is generated during the handshake between user location 10 and the cloud server [1] 30.

The cloud server [1] 30 executes decryption processing using the communication encryption key A for the content encryption key in the encrypted state, which is received from the user location 10, and acquires the content encryption key.

The user location 10 encrypts the data to be made confidential (i.e., the original data of plain text) using the content encryption key (4), and double-encrypts the encrypted data generated by the encryption using the content encryption key, with the communication encryption key B (5). The communication encryption key B is an encryption key for cryptographic communication, which is generated during the handshake between user location 10 and the secret sharing location 20. The user location 10 sends the encrypted data in the double-encrypted state to the secret sharing location 20 (6).

The secret sharing location 20 executes decryption processing using the communication cipher key B for the encrypted data in the double-encrypted state, which is received from the user location 10 (7), and acquires the encrypted data in the state of being encrypted with the content encryption key. The secret sharing location 20 executes distribution processing for the encrypted data (8) and generates N pieces of distributed data. The secret sharing location 20 encrypts one of the N pieces of distributed data with the communication encryption key C (9) and sends the encrypted data to the cloud server [1] 30 (10). The communication encryption key C is an encryption key for cryptographic communication, which is generated during the handshake between the secret sharing location 20 and the cloud server [1] 30. In other words, the distributed data is in a state of being double-encrypted at this time.

The cloud server [1] 30 executes decryption processing using the communication encryption key C for the distributed data in the double-encrypted state, which is received from the secret sharing location 20 (11), and executes decryption processing using the content encryption key (12). As a result, the cloud server [1] 30 acquires the distributed data generated by executing distribution processing for the original data of plain text.

Similarly, the user location 10 also sends the content encryption key to other cloud servers 30 (in this example, only cloud server [N] 30) other than the cloud server [1] 30 by the cryptographic communication (13, 14). When sending the content encryption key to the cloud server [N] 30, the user location 10 encrypts the content encryption key using a communication encryption key D, which is generated during the handshake with the cloud server [N] 30.

The cloud server [N] 30 executes decryption processing using the communication encryption key D for the content encryption key in the encrypted state, which is received from the user location 10 (15), and acquires the content encryption key.

The secret sharing location 20 encrypts one of the above-mentioned N pieces of distributed data with the communication encryption key E (16) and sends the encrypted data to the cloud server [N] 30 (17). The communication encryption key E is an encryption key for cryptographic communication, which is generated during the handshake between the secret sharing location 20 and the cloud server [N] 30.

The cloud server [N] 30 executes decryption processing using the communication encryption key E for the distributed data in the double-encrypted state, which is received from the secret sharing location 20 (18), and executes decryption processing using the content encryption key (19). As a result, the cloud server [N] 30 acquires the distributed data generated by executing distribution processing for the original data of plain text.

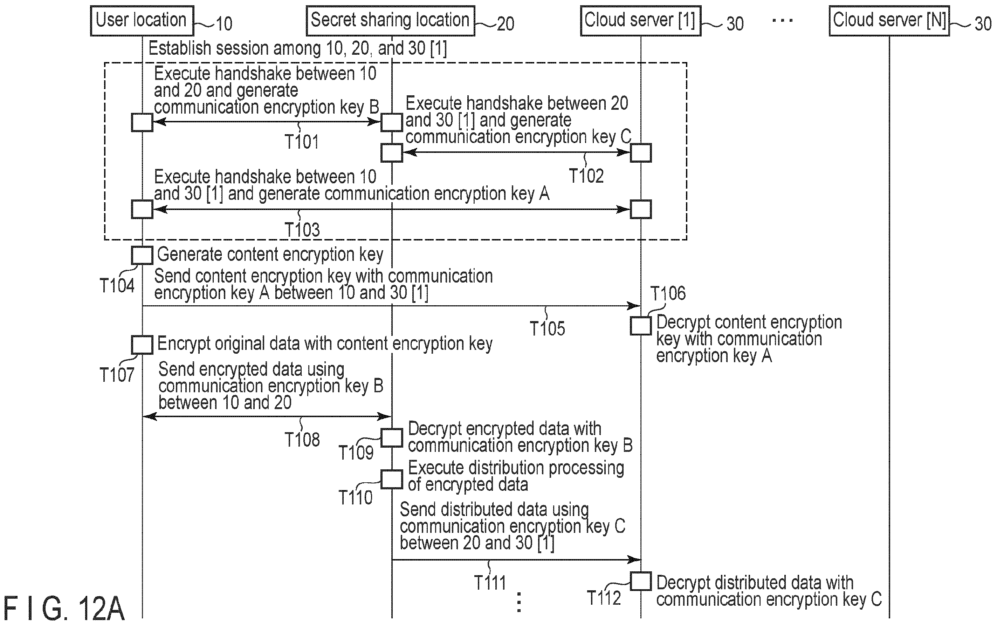

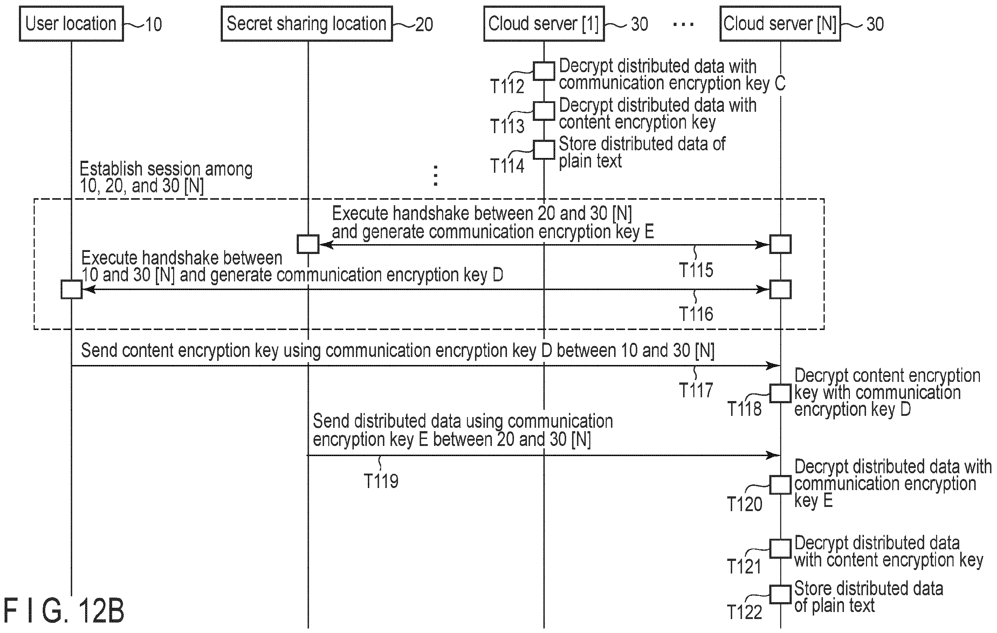

FIG. 12A and FIG. 12B are sequence charts of the two-path communication in the secret sharing-based storage system 1 of the first embodiment.

First, a session is also established among the user location 10, the secret sharing location 20, and the cloud server [1] 30. More specifically, a handshake is executed between the user location 10 and the secret sharing location 20 to generate the communication encryption key B (T101). A handshake is executed between the secret sharing location 20 and the cloud server [1] 30 to generate the communication encryption key C (T102). A handshake is executed between the user location 10 and the cloud server [1] 30 to generate the communication encryption key A (T103).

Next, the user location 10 generates the content encryption key (T104). The user location 10 encrypts the content encryption key with the communication encryption key A (1), and sends the encrypted content encryption key to the cloud server [1] 30 (T105). The cloud server [1] 30 decrypts the content encryption key in the encrypted state, which is received from the user location 10, with the communication encryption key A (T106).

The user location 10 encrypts the original data with the content encryption key (T107). The user location 10 sends the encrypted data generated by encrypting the original data using the content encryption key to the secret sharing location 20 by the cryptographic communication using the communication encryption key B (T108).

The secret sharing location 20 decrypts the encrypted data in the double-encrypted state, which is received from the user location 10, with the communication encryption key B (T109). The secret sharing location 20 generates N pieces of distributed data by executing distribution processing on the encrypted data which has been encrypted with the communication encryption key B and which is in a state of being encrypted with the content encryption key (T110). The secret sharing location 20 sends one of the N pieces of distributed data to the cloud server [1] 30 by the cryptographic communication using the communication encryption key C (T111).

The cloud server [1] 30 executes decryption processing using the communication encryption key C for the distributed data received from the secret sharing location 20 (T112). Furthermore, the cloud server [1] 30 executes decryption processing using the content encryption key for the distributed data which has been decrypted with the communication encryption key C (T113). The cloud server [1] 30 stores the distributed data of the original data, which is obtained by decryption using the content encryption key (T114).

Similarly, a session is also established among the user location 10, the secret sharing location 20, and other cloud servers 30 (in this example, only cloud server [N] 30) other than the cloud server [1] 30. For example, a handshake is executed between the secret sharing location 20 and the cloud server [N] 30 to generate the communication encryption key E (T115). A handshake is executed between the user location 10 and the cloud server [N] 30 to generate the communication encryption key D (T116).

In addition, the user location 10 encrypts the content encryption key with the communication encryption key D, and sends the encrypted content encryption key to the cloud server [N] 30 (T117). The cloud server [N] 30 decrypts the content encryption key in the encrypted state, which is received from the user location 10, with the communication encryption key D (T118).

The secret sharing location 20 executes encryption communication of one of the above-mentioned N pieces of distributed data to the cloud server [N] 30, using the communication encryption key E (T119). In contrast, the cloud server [N] 30 executes decryption processing using the communication encryption key E for the distributed data received from the secret sharing location 20 (T120), and executes decryption processing using the content encryption key (T121). The cloud server [N] 30 stores the distributed data of the original data, which is obtained by decryption using the content encryption key (T122).

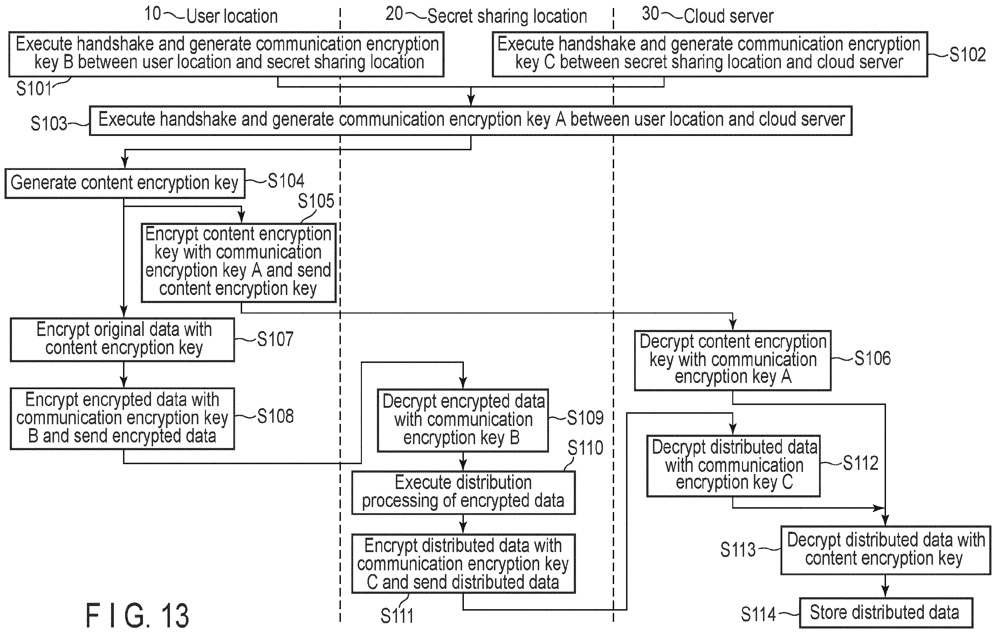

FIG. 13 is a flowchart showing the two-path communication in the secret sharing-based storage system 1 of the first embodiment.

First, the user location 10 and the secret sharing location 20 execute a handshake and generate a communication encryption key B for cryptographic communication between the both parties (S101). In addition, the secret sharing location 20 and the cloud server 30 execute a handshake and generate a communication encryption key C for cryptographic communication between the both parties (S102). Furthermore, the user location 10 and the cloud server 30 execute a handshake and generate a communication encryption key A for cryptographic communication between the both parties (S103).

Next, the user location 10 generates a content encryption key for encrypting the data (original data) to be made confidential (S104). The user location 10 sends the generated content encryption key to the cloud server 30 by the cryptographic communication using the communication encryption key A (S105). The cloud server 30 decrypts the content encryption key received from the user location 10, with the communication encryption key A (S106).

The user location 10 encrypts the original data with the content encryption key (S107). The user location 10 sends the encrypted data generated by encrypting the original data using the content encryption key to the secret sharing location 20 by the cryptographic communication using the communication encryption key B (S108).

The secret sharing location 20 decrypts the encrypted data received from the user location 10, with the communication encryption key B (S109). This decryption decrypts the encryption for the cryptographic communication. The secret sharing location 20 executes distribution processing of the encrypted data (S110). The secret sharing location 20 sends one of the pieces of distributed data generated by the distribution processing to the cloud server 30 by the cryptographic communication using the communication encryption key C (S111).

The cloud server 30 decrypts the distributed data received from the secret sharing location 20, with the communication encryption key C (S112). In addition, the cloud server 30 executes decryption processing using the content encryption key for the distributed data which has been decrypted with the communication encryption key C (S113). The cloud server 30 stores the distributed data obtained by decryption using the content encryption key and generated by distributed processing of the original data (S114).

As described above, in the secret sharing-based storage system 1 of the first embodiment, storing the content encryption key at the user location 10 can be made unnecessary by executing the two-path communication, including executing communication for delivering the content encryption key between the user location 10 and the cloud server 30 via a separate path. In other words, the secret sharing-based storage system 1 of the first embodiment can support the secure storage of data without increasing the burden on the user.

(Modified Example of First Embodiment)

In the secret sharing-based storage system 1 of the first embodiment, encrypted data is sent and received between the user location 10 and the secret sharing location 20 by the cryptographic communication. In addition, the distributed data is sent and received between the secret sharing location 20 and the cloud server 30 by the cryptographic communication. One of examples of the cryptographic communication is SSL-VPN.

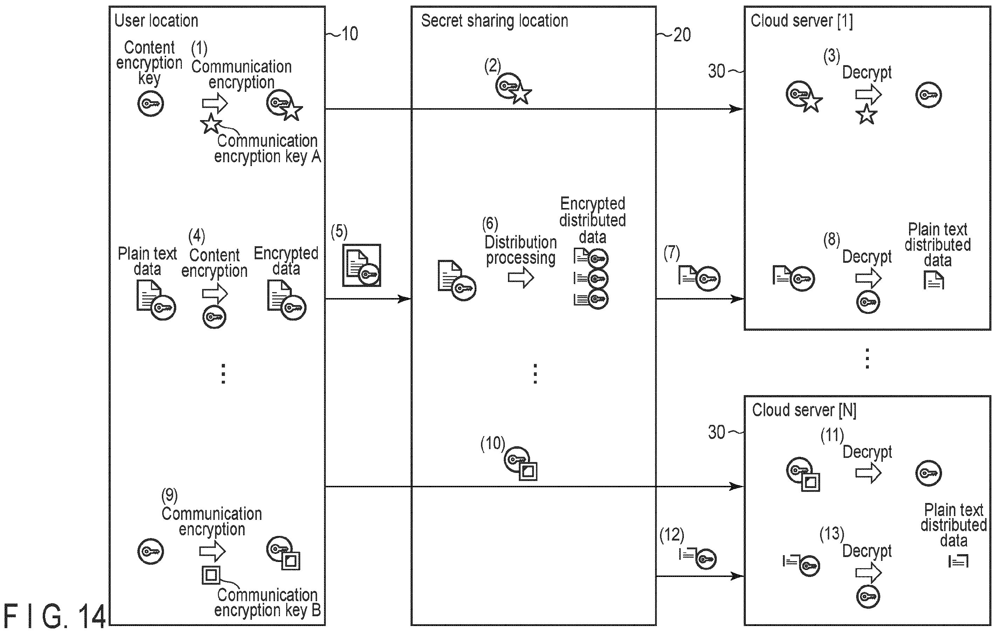

Incidentally, as described above, encrypted data obtained by encrypting the original data with the content encryption key, is delivered from the user location 10 to the secret sharing location 20. Therefore, the communication between the user location 10 and the secret sharing location 20, and the communication between the secret sharing location 20 and the cloud server 30 may not necessarily be cryptographic communication. FIG. 14 shows, as a modified example of the first embodiment, the operations of the two-path communication among the user location 10, the secret sharing location 20, and the cloud server 30 in the secret sharing-based storage system 1 in a case where the communication between the user location 10 and the secret sharing location 20, and the communication between the secret sharing location 20 and the cloud server 30, are non-cryptographic communication.

The user location 10 encrypts the content encryption key with the communication encryption key A (1), and sends the encrypted content encryption key to the cloud server [1] 30 (2). The communication encryption key A is an encryption key for cryptographic communication, which is generated during the handshake between user location 10 and the cloud server [1] 30.

The cloud server [1] 30 executes decryption processing using the communication encryption key A for the content encryption key in the encrypted state, which is received from the user location 10, and acquires the content encryption key of plain text.

The user location 10 encrypts the data to be made confidential (original data of plain text), with the content encryption key A (4). The user location 10 sends the encrypted data generated with the content encryption key to the secret sharing location 20 (5). In other words, in the modified example, encryption for the cryptographic communication is not executed for the encrypted data.

The secret sharing location 20 executes distribution processing for the encrypted data received from the user location 10 (6) and generates N pieces of distributed data. The secret sharing location 20 sends one of the N pieces of distributed data to the cloud server [1] 30 (7). In other words, in the modified example, encryption for the cryptographic communication is not executed for the distributed data, either.

The cloud server [1] 30 executes decryption processing using the content encryption key for the distributed data received from the secret sharing location 20 (8). As a result, the cloud server [1] 30 acquires the distributed data generated by executing distribution processing for the original data of plain text.

Similarly, the user location 10 also sends the content encryption key to other cloud servers 30 (in this example, only cloud server [N] 30) other than the cloud server [1] 30 by the cryptographic communication (9, 10). When sending the content encryption key to the cloud server [N] 30, the user location 10 encrypts the content encryption key using a communication encryption key B, which is generated during the handshake with the cloud server [1] 30.

The cloud server [N] 30 executes decryption processing using the communication encryption key B for the content encryption key in the encrypted state, which is received from the user location 10 (10), and acquires the content encryption key of plain text.

The secret sharing location 20 sends one of the above-mentioned N pieces of distributed data to the cloud server [N] 30 (12). As described above, in the modified example, encryption for the cryptographic communication is not executed for the distributed data.

The cloud server [N] 30 executes decryption processing using the content encryption key for the distributed data received from the secret sharing location 20 (13). As a result, the cloud server [N] 30 acquires the distributed data generated by executing distribution processing for the original data of plain text.

As described above, in the secret sharing-based storage system 1 of the modified example as well, storing the content encryption key at the user location 10 can be made unnecessary by executing the two-path communication, including executing communication for delivering the content encryption key between the user location 10 and the cloud server 30 via a separate path. In other words, the secret sharing-based storage system 1 of the modified example can also support the secure storage of data without increasing the burden on the user.

(Second Embodiment)

Next, a second embodiment will be described.

In the secret sharing-based storage system 1 of the first embodiment, a user location 10 acquires or generates a content encryption key for encrypting original data in some manner. The user location 10 encrypts the original data with the content encryption key and sends the generated encrypted data to the secret sharing location 20.

Incidentally, as described above, the user location 10 and the cloud server 30 execute a handshake to generate an encryption key for cryptographic communication (communication encryption key). In the secret sharing-based storage system 1 of the first embodiment, this communication encryption key is used for cryptographic communication of the content encryption key.

In the secret sharing-based storage system 1 of the second embodiment, the user location 10 saves labor of acquiring or generating the content encryption key, and uses the communication encryption key shared by the user location 10 and the cloud server 30 as the content encryption key.

The user location 10 shares the communication encryption key with N cloud servers 30. In the secret sharing-based storage system 1 of the second embodiment, the user location 10 sends N pieces of encrypted data, which are obtained by encrypting the original data with N content encryption keys, to the secret sharing location 20. In the secret sharing-based storage system 1 of the second embodiment, the secret sharing location 20 executes distribution processing for each of N pieces of encrypted data. For example, the secret sharing location 20 selects distributed data to be sent to the cloud server [1] 30 from among the N pieces of distributed data generated by executing distribution processing of the encrypted data encrypted using the communication encryption key shared between the user location 10 and the cloud server [1] 30 as the content encryption key A. N pieces of encrypted data that the user location 10 sends to the secret sharing location 20 include attribute information indicating which of the N cloud servers 30 corresponds to the data.

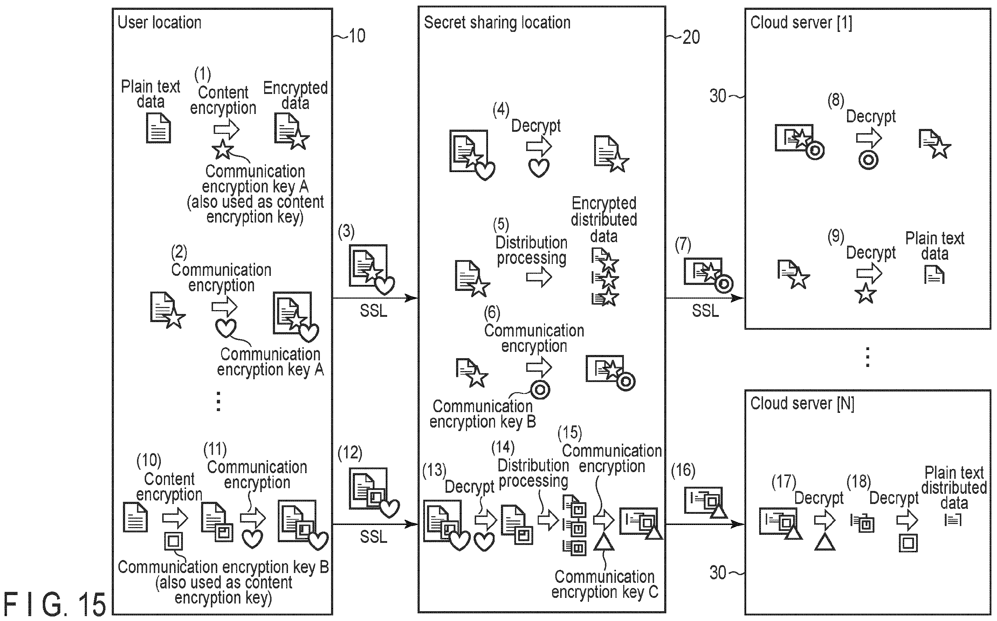

FIG. 15 is a view showing operations of two-path communication between the user location 10, the secret sharing location 20, and the cloud server 30 in the secret sharing-based storage system 1 of the second embodiment.

The user location 10 encrypts the data to be made confidential (original data of plain text), with the content encryption key A (1). The content encryption key A uses an encryption key for cryptographic communication (communication encryption key), which is generated during the handshake between the user location 10 and the cloud server [1] 30, as a content encryption key.

The user location 10 double-encrypts the encrypted data generated by encrypting the original data with the content encryption key A, with the communication encryption key A (2). The communication encryption key A is an encryption key for cryptographic communication, which is generated during the handshake between user location 10 and the secret sharing location 20. The user location 10 sends the encrypted data in the double-encrypted state to the secret sharing location 20 (3).

The secret sharing location 20 executes decryption processing using the communication cipher key A for the encrypted data in the double-encrypted state, which is received from the user location 10 (4), and acquires the encrypted data in the state of being encrypted with the content encryption key A. The secret sharing location 20 executes distribution processing for the encrypted data (5) and generates N pieces of distributed data. The secret sharing location 20 encrypts one of the N pieces of distributed data with the communication encryption key B and sends the encrypted data to the cloud server [1] 30 (7). The communication encryption key B is an encryption key for cryptographic communication, which is generated during the handshake between the secret sharing location 20 and the cloud server [1] 30.

The cloud server [1] 30 first executes decryption processing using the communication encryption key B for the distributed data received from the secret sharing location 20 (8). Next, the cloud server [1] 30 executes decryption processing using the content encryption key A (9). As a result, the cloud server [1] 30 acquires the distributed data generated by executing distribution processing for the original data of plain text.

As regards other cloud servers 30 (in this example, only cloud server [N] 30) other than the cloud server [1] 30, the user location 10 also encrypts the original data using the communication encryption key generated during the handshake with the other cloud server 30 as the content encryption key (10). In the case of the cloud server [N] 30, the user location 10 encrypts the original data using a content encryption key B, which is a communication encryption key generated during the handshake with the cloud server [N] 30.

The user location 10 double-encrypts the encrypted data generated by encrypting the original data with the content encryption key B, with the communication encryption key A (11). As described above, the communication encryption key A is an encryption key for cryptographic communication, which is generated during the handshake between user location 10 and the secret sharing location 20. The user location 10 sends the encrypted data in the double-encrypted state to the secret sharing location 20 (12).

The secret sharing location 20 executes decryption processing using the communication cipher key A for the encrypted data in the double-encrypted state, which is received from the user location 10 (13), and acquires the encrypted data in the state of being encrypted with the content encryption key B. The secret sharing location 20 executes distribution processing for the encrypted data (14) and generates N pieces of distributed data. The secret sharing location 20 encrypts one of the N pieces of distributed data with the communication encryption key C (15) and sends the encrypted data to the cloud server [N] 30 (16). The communication encryption key C is an encryption key for cryptographic communication, which is generated during the handshake between the secret sharing location 20 and the cloud server [N] 30.

The cloud server [N] 30 first executes decryption processing using the communication encryption key C for the distributed data received from the secret sharing location 20 (17). Next, the cloud server [N] 30 executes decryption processing using the content encryption key B (18). As a result, the cloud server [N] 30 acquires the distributed data generated by executing distribution processing for the original data of plain text.

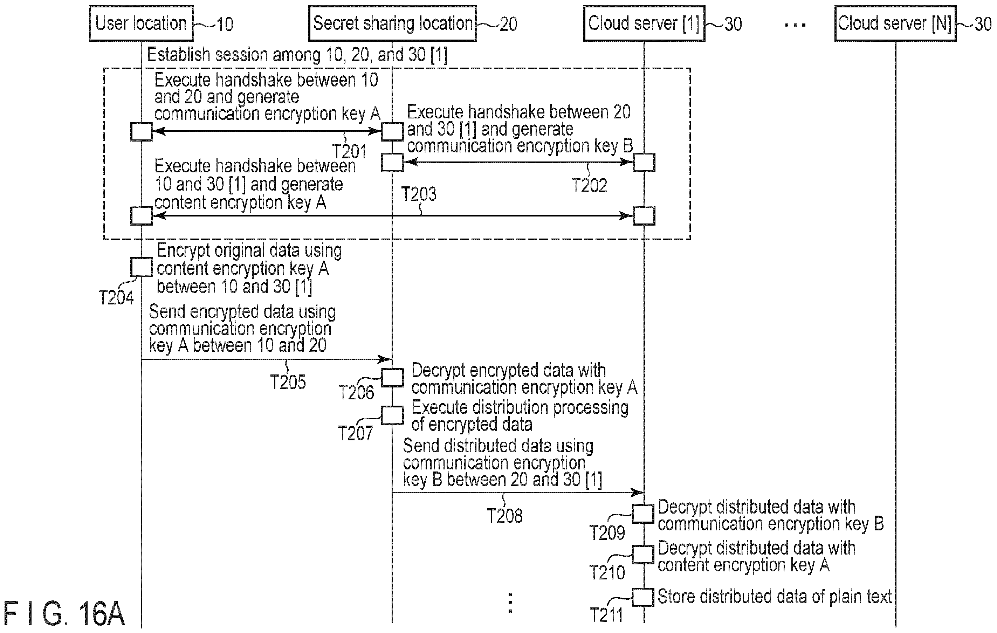

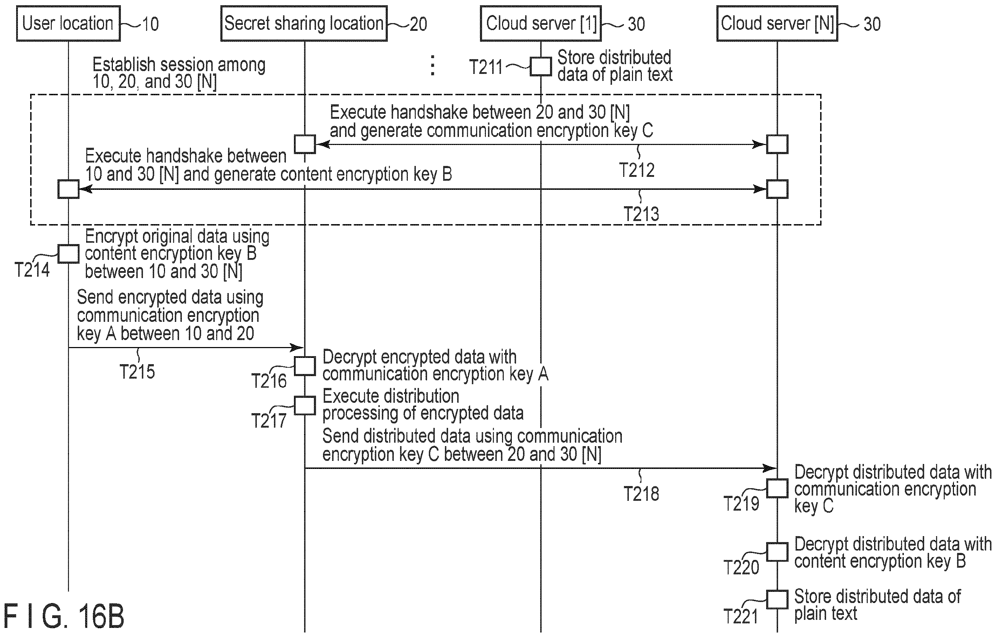

FIG. 16A and FIG. 16B are sequence charts of the two-path communication in the secret sharing-based storage system 1 of the second embodiment.

First, a session is also established among the user location 10, the secret sharing location 20, and the cloud server [1] 30. More specifically, a handshake is executed between the user location 10 and the secret sharing location 20 to generate the communication encryption key A (T201). A handshake is executed between the secret sharing location 20 and the cloud server [1] 30 to generate the communication encryption key B (T202). A handshake is executed between the user base 10 and the cloud server [1] 30, to generate the content encryption key A (also used as the communication encryption key) (T203).

The user location 10 encrypts the original data with the content encryption key A (T204). The user location 10 sends the encrypted data generated by encrypting the original data using the content encryption key A to the secret sharing location 20 by the cryptographic communication using the communication encryption key A (T205).

The secret sharing location 20 decrypts the encrypted data in the double-encrypted state, which is received from the user location 10, with the communication encryption key A (T206). The secret sharing location 20 generates N pieces of distributed data by executing distribution processing on the encrypted data which has been encrypted with the communication encryption key A and which is in a state of being encrypted with the content encryption key A (T207). The secret sharing location 20 sends one of the N pieces of distributed data to the cloud server [1] 30 by the cryptographic communication using the communication encryption key B (T208).

The cloud server [1] 30 executes decryption processing using the communication encryption key B for the distributed data received from the secret sharing location 20 (T209). Furthermore, the cloud server [1] 30 executes decryption processing using the content encryption key A for the distributed data which has been decrypted with the communication encryption key B (T210). The cloud server [1] 30 stores the distributed data of the original data, which is obtained by decryption using the content encryption key A (T211).

Similarly, a session is also established among the user location 10, the secret sharing location 20, and other cloud servers 30 (in this example, only cloud server [N] 30) other than the cloud server [1] 30. For example, a handshake is executed between the secret sharing location 20 and the cloud server [N] 30 to generate the communication encryption key C (T212). A handshake is executed between the user base 10 and the cloud server [N] 30, to generate the content encryption key B (also used as the communication encryption key) and the communication encryption key D (T213).

The user location 10 encrypts the original data with the content encryption key B (T214). The user location 10 sends the encrypted data generated by encrypting the original data using the content encryption key B to the secret sharing location 20 by the cryptographic communication using the communication encryption key A (T215).

The secret sharing location 20 decrypts the encrypted data in the double-encrypted state, which is received from the user location 10, with the communication encryption key A (T216). The secret sharing location 20 generates N pieces of distributed data by executing distribution processing on the encrypted data which has been encrypted with the communication encryption key A and which is in a state of being encrypted with the content encryption key B (T217). The secret sharing location 20 sends one of the N pieces of distributed data to the cloud server [N] 30 by the cryptographic communication using the communication encryption key C (T218).

The cloud server [N] 30 executes decryption processing using the communication encryption key C for the distributed data received from the secret sharing location 20 (T219). Furthermore, the cloud server [N] 30 executes decryption processing using the content encryption key B for the distributed data which has been decrypted with the communication encryption key C (T220). The cloud server [N] 30 stores the distributed data of the original data, which is obtained by decryption using the content encryption key B (T221).

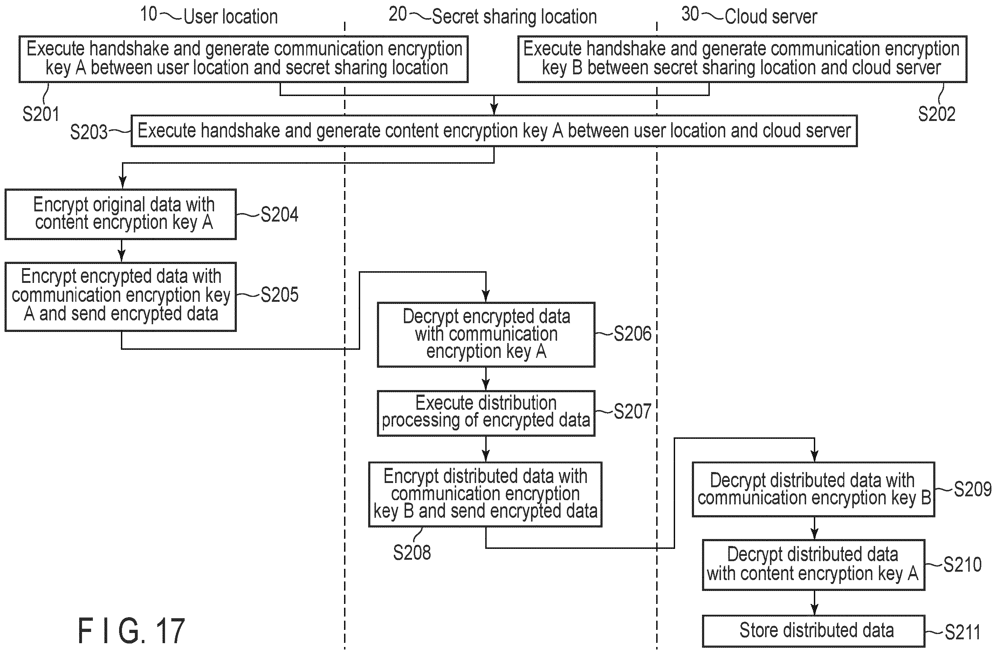

FIG. 17 is a flowchart showing the two-path communication in the secret sharing-based storage system 1 of the second embodiment.

First, the user location 10 and the secret sharing location 20 execute a handshake and generate a communication encryption key A for cryptographic communication between the both parties (S201). In addition, the secret sharing location 20 and the cloud server 30 execute a handshake and generate a communication encryption key B for cryptographic communication between the both parties (S202). Furthermore, the user location 10 and the cloud server 30 execute a handshake and generate a content encryption key A (also used as a communication encryption key) for encrypting the data (original data) to be made confidential (S203).

The user location 10 encrypts the original data with the content encryption key A (S204). The user location 10 sends the encrypted data generated by encrypting the original data using the content encryption key to the secret sharing location 20 by the cryptographic communication using the communication encryption key A (S205).

The secret sharing location 20 decrypts the encrypted data received from the user location 10, with the communication encryption key A (S206). This decryption decrypts the encryption for the cryptographic communication. The secret sharing location 20 executes distribution processing of the encrypted data (S207). The secret sharing location 20 sends the distributed data generated by the distribution processing to the cloud server 30 by the cryptographic communication using the communication encryption key C (S208).

The cloud server 30 decrypts the distributed data received from the secret sharing location 20, with the communication encryption key B (S209). In addition, the cloud server 30 executes decryption processing using the content encryption key A for the distributed data which has been decrypted with the communication encryption key B (S210). The cloud server 30 stores the distributed data obtained by decryption using the content encryption key A and generated by distributed processing of the original data (S211).

As described above, in the secret sharing-based storage system 1 of the second embodiment as well, storing the content encryption key at the user location 10 can be made unnecessary by executing the two-path communication, including executing communication for delivering the content encryption key (generating and sharing the communication encryption key) between the user location 10 and the cloud server 30 via a separate path. In other words, the secret sharing-based storage system 1 of the second embodiment can support the secure storage of data without increasing the burden on the user.

(Modified Example of Second Embodiment)

In the secret sharing-based storage system 1 of the second embodiment as well, similarly to the secret sharing-based storage system 1 of the first embodiment, encrypted data is sent and received between the user location 10 and the secret sharing location 20 by the cryptographic communication. In addition, the distributed data is sent and received between the secret sharing location 20 and the cloud server 30 by the cryptographic communication.

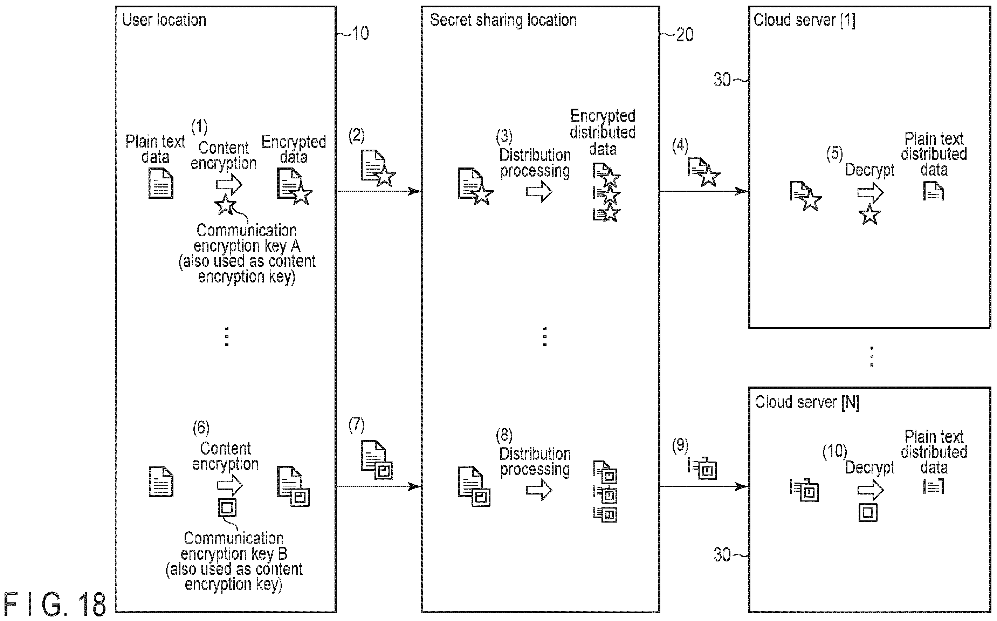

As described above, encrypted data obtained by encrypting the original data with the content encryption key, is delivered from the user location 10 to the secret sharing location 20. Therefore, the communication between the user location 10 and the secret sharing location 20, and the communication between the secret sharing location 20 and the cloud server 30 may not necessarily be cryptographic communication. FIG. 18 shows, as a modified example of the second embodiment, the operations of the two-path communication among the user location 10, the secret sharing location 20, and the cloud server 30 in the secret sharing-based storage system 1 in a case where the communication between the user location 10 and the secret sharing location 20, and the communication between the secret sharing location 20 and the cloud server 30, are non-cryptographic communication.

The user location 10 encrypts the data to be made confidential (original data of plain text), with the content encryption key A (1). The content encryption key A uses an encryption key for cryptographic communication (communication encryption key), which is generated during the handshake between the user location 10 and the cloud server [1] 30, as a content encryption key.

The user location 10 sends the encrypted data generated with the content encryption key A to the secret sharing location 20 (2). In other words, in the modified example, encryption for the cryptographic communication is not executed for the encrypted data.

The secret sharing location 20 executes distribution processing for the encrypted data received from the user location 10 (3) and generates N pieces of distributed data. The secret sharing location 20 sends one of the N pieces of distributed data to the cloud server [1] 30 (4). In other words, in the modified example, encryption for the cryptographic communication is not executed for the distributed data, either.

The cloud server [1] 30 executes decryption processing using the content encryption key A for the distributed data received from the secret sharing location 20 (5). As a result, the cloud server [1] 30 acquires the distributed data generated by executing distribution processing for the original data of plain text.

As regards other cloud servers 30 (in this example, only cloud server [N] 30) other than the cloud server [1] 30, the user location 10 also encrypts the original data using the communication encryption key generated during the handshake with the other cloud server 30 as the content encryption key (6). In the case of the cloud server [N] 30, the user location 10 encrypts the original data using a content encryption key B, which is a communication encryption key generated during the handshake with the cloud server [1] 30. The user location 10 sends the encrypted data generated with the content encryption key B to the secret sharing location 20 (7). As described above, in the modified example, encryption for the cryptographic communication is not executed for the encrypted data.

The secret sharing location 20 executes distribution processing for the encrypted data received from the user location 10 (8) and generates N pieces of distributed data. The secret sharing location 20 sends one of the N pieces of distributed data to the cloud server [N] 30 (9). As described above, in the modified example, encryption for the cryptographic communication is not executed for the distributed data.

The cloud server [N] 30 executes decryption processing using content encryption key B for the distributed data received from the secret distribution location 20 (10), and acquires the distributed data generated by executing distribution processing on the original data of plain text.

As described above, in the secret sharing-based storage system 1 of the modified example as well, storing the content encryption key at the user location 10 can be made unnecessary by executing the two-path communication, including executing communication for delivering the content encryption key (generating and sharing the communication encryption key) between the user location 10 and the cloud server 30 via a separate path. In other words, the secret sharing-based storage system 1 of the modified example can support the secure storage of data without increasing the burden on the user.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A secret sharing-based storage system (1) comprising:

   N cloud servers (30), the N being an integer of 2 or more; and
   a secret sharing device (20) configured to receive second data obtained by encrypting first data using a cryptographic key from a user terminal (10), generate N pieces of distributed data by distributing the second data, and separately store the N pieces of distributed data in the N cloud servers, wherein
   the system (1) is configured to execute two-path communication between the user terminal and each of the N cloud servers using a first path and a second path, the first path being a path for sending the second data from the user terminal to the secret sharing device and sending the distributed data from the secret sharing device to the cloud server, the second path being a path for sending the encryption key from the user terminal to the cloud server.

2. The secret sharing-based storage system of claim 1, wherein

   the first path and the second path are virtually provided on a same physical pat, and
   two-path communication between the user terminal and each of the N cloud servers is executed using the same physical path.

3. The secret sharing-based storage system (1) of claim 2, wherein

   sending the second data from the user terminal to the secret sharing device and sending the distributed data from the secret sharing device to the cloud server, on the first path, are executed by secure sockets layer (SSL), and
   sending the encryption key from the user terminal to the cloud server on the second path is executed by SSL over SSL.

4. The secret sharing-based storage system (1) of claim 1, wherein
   as regards the encryption key, an encryption key shared for cryptographic communication between the user terminal (10) and the cloud server (30) is used .

5. A secret sharing-based storage system (1) comprising:

   N cloud servers (30), the N being an integer of 2 or more); and
   a secret sharing device (20) configured to receive N pieces of second data obtained by encrypting each piece of first data using N encryption keys shared between a user terminal (10) and the N cloud servers (30) from the user terminal (10), generate N pieces of distributed data for each of the N pieces of second data by executing distribution processing for each of the N pieces of second data, select one piece of distributed data from among the N pieces of distributed data for each of the N pierces of second data, and store distributed data separately for the N cloud servers (30), wherein
   the system (1) is configured to execute two-path communication between the user terminal and each of the N cloud servers (30) using a first path and a second path, the first path being a path for sending the second data from the user terminal to the secret sharing device and sending the distributed data from the secret sharing device to the cloud server, the second path being a path for sharing the encryption key between the user terminal and the cloud server.

6. A secret sharing-based storage method comprising:

   receiving second data obtained by encrypting first data with an encryption key from a user terminal;
   generating N pieces of distributed data by executing distribution processing on the second data, the N being integer larger than or equal to two;
   storing the N pieces of distributed data in N cloud servers, at a secret sharing device; and
   executing two-path communication between the user terminal and each of the N cloud servers using a first path and a second path, the first path being a path for sending the second data from the user terminal to the secret sharing device and sending the distributed data from the secret sharing device to the cloud server, the second path being a path for sending the encryption key from the user terminal to the cloud server.

1 Secret sharing-based storage system

F I G. 1

10

User location ──Encrypted data──▶ Secret sharing location ──Distributed data──▶ Cloud server

20

30

a1

a2

◀── Encryption key ──

b1

F I G. 2

10

a1  c1

20

a2  c2

30

User location ◀══▶ Secret sharing location ◀══▶ Cloud server

b1

F I G. 3

F I G. 4

EP 4 625 880 A1

| Original data | D1 | D2 | D3 | D4 |
|---|---|---|---|---|
| | XOR operation | | | |
| Content encryption key (common key) | R1 | R2 | R3 | R4 |
| Encrypted data | $T1=D1\oplus R1$ | $T2=D2\oplus R2$ | $T3=D3\oplus R3$ | $T4=D4\oplus R4$ |
| Data encrypted with communication encryption key B | EncB(T1) | EncB(T2) | EncB(T3) | EncB(T4) |

F I G. 5A

| Data decrypted with communication encryption key B | T1 | T2 | T3 | T4 |
|---|---|---|---|---|

| Secret sharing random numbers | EA1 | EA2 | EA3 | EA4 |
|---|---|---|---|---|

| Distributed data 1 | T1⊕EA1 | T2⊕EA2 | T3⊕EA3 | T4⊕EA4 |
|---|---|---|---|---|
| Distributed data 2 | T1 | T2⊕EA1 | T3⊕EA2 | T4⊕EA3 |
| Distributed data 3 | EA1 | T1⊕EA2 | T2⊕EA3 | T3⊕EA4 |

| Data obtained by encrypting distributed data 1 with communication encryption key C1 | EncC1(T1⊕EA1) | EncC1(T2⊕EA2) | EncC1(T3⊕EA3) | EncC1(T4⊕EA4) |
|---|---|---|---|---|
| Data obtained by encrypting distributed data 2 with communication encryption key C2 | EncC2(T1) | EncC2(T2⊕EA1) | EncC2(T3⊕EA2) | EncC2(T4⊕EA3) |
| Data obtained by encrypting distributed data 3 with communication encryption key C3 | EncC3(EA1) | EncC3(T1⊕EA2) | EncC3(T2⊕EA3) | EncC3(T3⊕EA4) |

F I G. 5B

EP 4 625 880 A1

Processing of cloud server [1]

Decrypt with communication encryption key C1
to extract distributed data 1

| $T1 \oplus EA1$ | $T2 \oplus EA2$ | $T3 \oplus EA3$ | $T4 \oplus EA4$ |
| --- | --- | --- | --- |
| XOR operation | | | |
| R1 | R2 | R3 | R4 |

Content encryption key (common key)

Distributed data 1 stored in cloud server [1]

| $D1 \oplus EA1$ | $D2 \oplus EA2$ | $D3 \oplus EA3$ | $D4 \oplus EA4$ |
| --- | --- | --- | --- |

FIG. 5C

EP 4 625 880 A1

Processing of cloud server [2]

Decrypt with communication encryption key C2
to extract distributed data 2

| T1 | T2⊕EA1 | T3⊕EA2 | T4⊕EA3 |
|---|---|---|---|
| XOR operation | | | |

Content encryption key (common key)

| R1 | R2 | R3 | R4 |
|---|---|---|---|

Distributed data 2 stored in cloud server [2]

| D1 | D2⊕EA1 | D3⊕EA2 | D4⊕EA3 |
|---|---|---|---|

F I G. 5D

EP 4 625 880 A1

## Processing of cloud server [3]

Decrypt with communication encryption key C3
to extract distributed data 3

| EA1 | T1⊕EA2 | T2⊕EA3 | T3⊕EA4 |
|---|---|---|---|
| XOR operation | | | |

Content encryption key (common key)

| | R1 | R2 | R3 |
|---|---|---|---|

Distributed data 3 stored in cloud server [3]

| EA1 | D1⊕EA2 | D2⊕EA3 | D3⊕EA4 |
|---|---|---|---|

# FIG. 5E

Processing of cloud server [1]

| | | | |
|---|---|---|---|
| Distributed data stored in cloud server [1] 30 | D1⊕EA1 | D2⊕EA2 | D3⊕EA3 | D4⊕EA4 |
| | XOR operation | | | |
| Content encryption key (common key) | R'1 | R'2 | R'3 | R'4 |
| Distributed data 1 | T1⊕EA1 | T2⊕EA2 | T3⊕EA3 | T4⊕EA4 |
| Communication-encrypted distributed data 1 | EncC1(T1⊕EA1) | EncC1(T2⊕EA2) | EncC1(T3⊕EA3) | EncC1(T4⊕EA4) |

F I G. 6A

EP 4 625 880 A1

Processing of cloud server [2]

| | | | |
|---|---|---|---|
| Distributed data stored in cloud server [2] 30 | D1 | D2⊕EA1 | D3⊕EA2 | D4⊕EA3 |

| | |
|---|---|
| | XOR operation |

| | | | |
|---|---|---|---|
| Content encryption key (common key) | R'1 | R'2 | R'3 | R'4 |

| | | | |
|---|---|---|---|
| Distributed data 2 | T1 | T2⊕EA1 | T3⊕EA2 | T4⊕EA3 |

| | | | |
|---|---|---|---|
| Communication-encrypted distributed data 2 | EncC3(EA1) | EncC3(T1⊕EA2) | EncC3(T2⊕EA3) | EncC3(T3⊕EA4) |

F I G. 6B

Processing of cloud server [3]

| Distributed data stored in cloud server [3] 30 | EA1 | D1⊕EA2 | D2⊕EA3 | D3⊕EA4 |
|---|---|---|---|---|
| | XOR operation | | | |
| Content encryption key (common key) | | R'1 | R'2 | R'3 |
| Distributed data 3 | EA1 | T1⊕EA2 | T2⊕EA3 | T3⊕EA4 |
| Communication-encrypted distributed data 3 | EncC3(EA1) | EncC3(T1⊕EA2) | EncC3(T2⊕EA3) | EncC3(T3⊕EA4) |

FIG. 6C

| Encrypted distributed data 1' received from cloud server [1] 30 | EncC3(EA1) | EncC3(T1⊕EA2) | EncC3(T2⊕EA3) | EncC3(T3⊕EA4) |
|---|---|---|---|---|
| Encrypted distributed data 2' received from cloud server [2] 30 | EncC3(EA1) | EncC3(T1⊕EA2) | EncC3(T2⊕EA3) | EncC3(T3⊕EA4) |
| Encrypted distributed data 3' received from cloud server [3] 30 | EncC3(EA1) | EncC3(T1⊕EA2) | EncC3(T2⊕EA3) | EncC3(T3⊕EA4) |

F I G. 6D

EP 4 625 880 A1

| | | | | |
|---|---|---|---|---|
| Extract distributed data 1 by decrypting with communication encryption key C1 | T1⊕EA1 | T2⊕EA2 | T3⊕EA3 | T4⊕EA4 |
| Extract distributed data 2 by decrypting with communication encryption key C2 | T1 | T2⊕EA1 | T3⊕EA2 | T4⊕EA3 |
| Extract distributed data 3 by decrypting with communication encryption key C3 | EA1 | T1⊕EA2 | T2⊕EA3 | T3⊕EA4 |

F I G. 6E

F I G. 7

F I G. 8

FIG. 9

(A) Step 1: Generate content encryption key at any timing (once)

(B) Step 2: Distribute encrypted data and execute sending continuously

# F I G. 10

F I G. 11

FIG. 12A

EP 4 625 880 A1

FIG. 12B

EP 4 625 880 A1

10 — User location | 20 — Secret sharing location | 30 — Cloud server

| Execute handshake and generate communication encryption key B between user location and secret sharing location | Execute handshake and generate communication encryption key C between secret sharing location and cloud server — S102 |

S101

S103 — Execute handshake and generate communication encryption key A between user location and cloud server

Generate content encryption key — S104

S105

Encrypt content encryption key with communication encryption key A and send content encryption key

Encrypt original data with content encryption key — S107

Decrypt content encryption key with communication encryption key A — S106

Encrypt encrypted data with communication encryption key B and send encrypted data — S108

Decrypt encrypted data with communication encryption key B — S109

Execute distribution processing of encrypted data

S110

Decrypt distributed data with communication encryption key C — S112

Encrypt distributed data with communication encryption key C and send distributed data

S111

S113 — Decrypt distributed data with content encryption key

**F I G. 13**

S114 — Store distributed data

F I G. 14

F I G. 15

EP 4 625 880 A1

FIG. 16A

User location ~10   Secret sharing location ~20   Cloud server [1] ~30   ...   Cloud server [N] ~30

Establish session among 10, 20, and 30 [1]

Execute handshake between 10 and 20 and generate communication encryption key A

Execute handshake between 20 and 30 [1] and generate communication encryption key B

T201

T202

Execute handshake between 10 and 30 [1] and generate content encryption key A

T203

Encrypt original data using content encryption key A between 10 and 30 [1]

T204

Send encrypted data using communication encryption key A between 10 and 20

T205

T206   Decrypt encrypted data with communication encryption key A

T207   Execute distribution processing of encrypted data

Send distributed data using communication encryption key B between 20 and 30 [1]

T208

T209   Decrypt distributed data with communication encryption key B

T210   Decrypt distributed data with content encryption key A

T211   Store distributed data of plain text

EP 4 625 880 A1

FIG. 16B

EP 4 625 880 A1

10 ～ User location
20 ～ Secret sharing location
30 ～ Cloud server

S201 — Execute handshake and generate communication encryption key A between user location and secret sharing location

S202 — Execute handshake and generate communication encryption key B between secret sharing location and cloud server

S203 — Execute handshake and generate content encryption key A between user location and cloud server

S204 — Encrypt original data with content encryption key A

S205 — Encrypt encrypted data with communication encryption key A and send encrypted data

S206 — Decrypt encrypted data with communication encryption key A

S207 — Execute distribution processing of encrypted data

S208 — Encrypt distributed data with communication encryption key B and send encrypted data

S209 — Decrypt distributed data with communication encryption key B

S210 — Decrypt distributed data with content encryption key A

S211 — Store distributed data

F I G. 17

FIG. 18

| | Europäisches Patentamt European Patent Office Office européen des brevets | **EUROPEAN SEARCH REPORT** | **Application Number** EP 25 16 3358 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 929 896 A1 (PANASONIC CORP [JP]; NAT INST INF & COMM TECH [JP]) 29 December 2021 (2021-12-29) * paragraph [0007] - paragraph [0010] * * paragraph [0085] - paragraph [0117]; figures 5,6,10 * | 1-6 | INV. H04L9/08 |
| A | US 2008/304661 A1 (KATO TAKEHISA [JP] ET AL) 11 December 2008 (2008-12-11) * paragraph [0042] - paragraph [0096]; figures 1,2,3 * | 1-6 | |
| A | JP 2023 145914 A (TOSHIBA CORP; TOSHIBA DIGITAL SOLUTIONS CORP) 12 October 2023 (2023-10-12) * paragraph [0009] - paragraph [0051]; figures 1, 4 * * paragraph [0074] - paragraph [0102]; figures 9, 10 * | 1-6 | |
| | | | **TECHNICAL FIELDS SEARCHED (IPC)** H04L |

The present search report has been drawn up for all claims

| Place of search | Date of completion of the search | Examiner |
|---|---|---|
| Munich | 11 July 2025 | Spranger, Stephanie |

EPO FORM 1503 03.82 (P04C01)

**ANNEX TO THE EUROPEAN SEARCH REPORT
ON EUROPEAN PATENT APPLICATION NO.**

EP 25 16 3358

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | | Publication date | Patent family member(s) | | Publication date |
|---|---|---|---|---|---|
| EP 3929896 | A1 | 29-12-2021 | CN | 113474829 A | 01-10-2021 |
| | | | EP | 3929896 A1 | 29-12-2021 |
| | | | JP | 7356673 B2 | 05-10-2023 |
| | | | JP | 2020134841 A | 31-08-2020 |
| | | | US | 2022147640 A1 | 12-05-2022 |
| | | | WO | 2020170695 A1 | 27-08-2020 |
| US 2008304661 | A1 | 11-12-2008 | JP | 4316636 B2 | 19-08-2009 |
| | | | JP | 2008306406 A | 18-12-2008 |
| | | | US | 2008304661 A1 | 11-12-2008 |
| JP 2023145914 | A | 12-10-2023 | EP | 4254856 A1 | 04-10-2023 |
| | | | JP | 2023145914 A | 12-10-2023 |
| | | | US | 2023388105 A1 | 30-11-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007124032 A